(19) Europäisches Patentamt
European Patent Office
Office européen des brevets

(11) **EP 1 950 036 A1**

(12) **EUROPEAN PATENT APPLICATION**
published in accordance with Art. 158(3) EPC

(43) Date of publication:
**30.07.2008 Bulletin 2008/31**

(51) Int Cl.:
**B32B 27/36** (2006.01)  **C08L 67/02** (2006.01)
**D06N 7/04** (2006.01)

(21) Application number: **06823370.9**

(22) Date of filing: **14.11.2006**

(86) International application number:
**PCT/JP2006/322596**

(87) International publication number:
**WO 2007/058152 (24.05.2007 Gazette 2007/21)**

(84) Designated Contracting States:
**DE FR GB IT SE**

(30) Priority: **15.11.2005 JP 2005329832**

(71) Applicant: **TORAY INDUSTRIES, INC.**
**Tokyo 103-8666 (JP)**

(72) Inventors:
• **HASHIMOTO, Kokichi**
**Shiga, 520-0226 (JP)**

• **YAKUSHIDOH, Kenichi**
**Otsu-shi, Shiga, 520-0842 (JP)**
• **KIMURA, Masahiro**
**Kyoto-shi, Kyoto, 606-8305 (JP)**

(74) Representative: **Oser, Andreas et al**
**Prüfer & Partner GbR**
**Patentanwälte**
**Sohnckestrasse 12**
**81479 München (DE)**

(54) **MATTE MULTILAYER POLYESTER FILM**

(57) The problem to be solved by this invention is to provide a matt multilayer polyester film excellent in fouling resistance, chemicals resistance, moldability, thermal adhesion, matt effect, embossability, water vapor barrier property, etc. and especially suitable for application to wallpaper.

A matt multiplayer polyester film comprising at least two layers A and B, wherein the polyester of the layer A is a polyester with a glass transition temperature TgA of 30 to 70°C consisting of (a) 60 to 95 wt% of a polyester and (b) 5 to 40 wt% of an incompatible resin, while the main one of the polyesters of the layer B is a copolyester with a melting point TmB of 120 to 210°C, the surface glossiness of said layer A being less than 50%.

**EP 1 950 036 A1**

**Description**

[Technical field]

The present invention relates to an improvement of conventional flexible films. In more detail, this invention relates to a matt multilayer polyester film excellent in fouling resistance, chemicals resistance, moldability, thermal adhesion, matt effect, embossability and gas barrier properties, especially water vapor barrier property. This invention also relates to a wallpaper board excellent in fouling resistance, chemicals resistance, embossability, compatibility between the matt effect after embossing and the thermal adhesion to the substrate, temporal fragility resistance and handling properties, obtained by using the matt multilayer polyester film.

[Background art]

Typical conventional flexible films are polyvinyl chloride films. The polyvinyl chloride films have been preferably used, since they are excellent in weather resistance and suitable for various types of processing such as embossing and can be produced at low cost.

However, the polyvinyl chloride films have such problem that poisonous gas is generated when the films are burned due to fire, etc. and that the plasticizer bleeds out, and because of these problems, environmentally friendly novel flexible films are being demanded in recent years.

In one of the areas where flexible films are used, they are used as surface layer films of wallpaper. In this application, the films are used to cover the surfaces of wallpaper boards and decorative boards respectively formed of polyvinyl chloride resin (hereinafter these boards are called PVC wallpaper boards) and the surfaces of polyvinyl chloride leathers. These films are required to have various properties such as plasticizer bleed-out preventability, chemicals resistance, embossability and thermal adhesion to the PVC substrate.

Presently mainly used surface layer films of wallpaper include ethylene vinyl alcohol copolymer (EVOH) films. The EVOH is good in plasticizer bleed-out preventability, chemicals resistance and embossability (for example, see Patent Document 1), but since it is not good in thermal adhesion to PVC wallpaper boards, it is necessary to cover the EVOH with an adhesive layer (for example, see Patent Document 2).

Further, interior decorative articles such as wallpaper boards are often preferred to be matt rather than being highly shiny, and also PVC wallpaper boards are generally matted.

Known matting methods include sandblasting methods and surface treatment methods using chemicals, but these methods have a disadvantage of high cost. As other matting methods, for example, methods of adding inorganic particles (for example, see Patent Document 3) are proposed, but these methods cannot achieve satisfactory matting.

As further other matting methods, methods of adding any thermoplastic resin (for example, see Patent Document 4) are proposed. These methods little allow the heating for embossing, etc. to cause de-matting and are excellent in matt effect, and the films having EVOH as the base resin are excellent in fouling resistance against crayon, coffee, water ink pens, soy sauce, etc. However, on the other hand, the films having EVOH as the base resin are poor in fouling resistance against curry and the adhesives deposited at wallpaper joints and deposited on the surfaces during construction work and are yellowed with lapse of time, since it is difficult to wipe them off. Further other problems of the films having EVOH as the base resin include poor chemicals resistance against the bleaching agents used in kitchens and against household detergents and poor embossability because of rather high glass transition temperature. Moreover, the films having EVOH as the base resin are excellent in gas barrier properties. However, though they are certainly excellent in oxygen barrier property, they are very inferior in water vapor barrier property. So, water is likely to pass through the films, and the films have such a problem that mildew is likely to be generated when the water contained in the adhesives migrates onto the film surfaces with lapse of time after installation of wallpaper boards, or when water is deposited on the film surfaces.

A multilayer film having a highly crystalline polyester laminated on one side of a flexible film (for example, see Patent Document 5) is proposed, but this multilayer film is not matt, though it is excellent in maintaining flexibility and transparency with lapse of time.

[Patent Document 1] JP60-224542A
[Patent Document 2] JP60-239233A
[Patent Document 3] Patent No. 3172559
[Patent Document 4] Patent No. 3474276
[Patent Document 5] JP5-131601A

[Disclosure of the invention]

[Problems to be solved by the invention]

As described above, highly demanded are surface layer films of wallpaper, especially wallpaper boards that have such functions as fouling resistance, chemicals resistance, moldability and thermal adhesion and especially little allow heating to cause de-matting. Further demanded are surface layer films of wallpaper with gas barrier properties, particularly capable of blocking the permeation of water vapor.

This invention has been completed as a result of a study made to solve the above-mentioned problems of the prior art. The object of this invention is to provide a matt multilayer polyester film excellent in the capability to interrupt polyvinyl chloride resin plasticizers, fouling resistance, chemicals resistance, moldability, thermal adhesion, matt effect, embossability and gas barrier properties, especially water vapor barrier property, and little allowing heating to cause de-matting. The object of this invention also includes the provision of a wallpaper board excellent in fouling resistance, chemicals resistance, embossability, compatibility between the matt effect after embossing and the thermal adhesion to the substrate, temporal fragility resistance and handling properties, obtained by using the matt multilayer polyester film.

[Means for solving the problems]

The inventors made an intensive study to achieve the above-mentioned object, and as a result, found that the effects corresponding to the above-mentioned object can be obtained by employing a film consisting of layers and keeping the polyester compositions and the crystalline or thermal properties of the respective layers and the surface glossiness of the layer A in respective specific ranges. Thus, this invention has been completed.

This invention for achieving the above-mentioned object provides a matt multiplayer polyester film comprising at least two layers A and B, wherein the polyester of the layer A is a polyester with a glass transition temperature TgA of 30 to 70˚C consisting of (a) 60 to 95 wt% of a polyester and (b) 5 to 40 wt% of an incompatible resin, while the main one of the polyesters of the layer B is a copolyester with a melting point TmB of 120 to 210˚C, the surface glossiness of said layer A being less than 50%.

Meanwhile, it is preferred that the matt multilayer polyester film of this invention satisfies any of the following conditions.

(A) The polyester of said layer A is a composition consisting of 60 to 90 wt% of the polyester (a), 5 to 20 wt% of the incompatible resin (b), and 5 to 20 wt% of a thermoplastic resin (c) and/or an inorganic filler (d).
(B) The incompatible resin (b) is a long chain aliphatic dicarboxylic acid copolyester.
(C) The polyesters of said layer B are copolyesters, each consisting of dicarboxylic acids including 90 mol% or more of an aromatic dicarboxylic acid and a long chain aliphatic dicarboxylic acid and glycols including 90 mol% or more of ethylene glycol and 1,4-butadiol, respectively as monomer components.
(D) At least one of the polyesters of said layer B satisfies the following (1) and (2):

(1) The amount of the aromatic dicarboxylic acid as a component is 60 to 99 mol% and the amount of the long chain aliphatic dicarboxylic acid as a component is 1 to 40 mol%, respectively based on the amount of all the dicarboxylic acids.
(2) The glycols as components include at least one or more glycols respectively with less than 10 carbon atoms.

(E) The dimer content of the long chain aliphatic dicarboxylic acid as a component is 70 to 90 wt% and the trimer content is 10 to 30 wt%.
(F) Said long chain aliphatic dicarboxylic acid as a component is a dimer acid or a dimer acid derivative.
(G) The plane orientation coefficient of the film is 0 to 0.05.

Further, the wallpaper board of this invention consists of said matt multilayer polyester film and a wallpaper board substrate laminated on each other with the surface A of said matt multilayer polyester film kept as the outer surface. It is especially preferred that said wallpaper board substrate contains a polyolefin resin layer or a polyvinyl chloride resin layer.

[Effects of the invention]

This invention can provide a matt multiplayer polyester film excellent in the capability to interrupt polyvinyl chloride resin plasticizers, fouling resistance, chemicals resistance, moldability, thermal adhesion, matt effect, embossability and gas barrier properties, especially water vapor barrier property and little allowing heating to cause de-matting.

The matt multilayer polyester film obtained in this invention can be used in various industrial materials and packaging materials because of the above-mentioned excellent properties, and is, above all, suitable for application to wallpaper boards. This invention can provide a wallpaper board excellent in fouling resistance, chemicals resistance, embossability, compatibility between the matt effect after embossing and the thermal adhesion to the substrate, temporal fragility resistance and handling properties.

[The best modes for carrying out the invention]

Preferred modes of the matt multilayer polyester film and the wallpaper board of this invention are explained below.

The matt multilayer polyester film of this invention comprises at least two layers A and B, wherein the polyester of the layer A is a polyester with a glass transition temperature TgA of 30 to 70˚C consisting of (a) 60 to 95 wt% of a polyester and (b) 5 to 40 wt% of an incompatible resin, while the main one of the polyesters of the layer B is a copolyester with a melting point TmB of 120 to 210˚C, the surface glossiness of said layer A being less than 50%.

In general, an amorphous polyester is usually poor in chemicals resistance and is likely to be eroded by solvents, etc. So, if it is printed or wiped using a solvent or the like, it may be whitened.

On the contrary, the layer A of the matt multilayer polyester film of this invention is a chemicals-resistant layer, since a crystalline polyester is used as the polyester (a).

Further, the layer A is a layer that can be molded, typically, embossed. For molding such as embossing, usually the polymer is heated to higher than the glass transition temperature (Tg) of the polymer for a certain period of time, and molded into a required shape, then being cooled to a temperature lower than Tg. So, the glass transition temperature of the layer A (hereinafter the glass transition temperature of the layer A is expressed as TgA) must be 30 to 70˚C. A preferred range is 35 to 65˚C, and a more preferred range is 40 to 60˚C. It is not preferred that TgA is higher than 70˚C, since heating for a certain period of time does not allow molding, and it is not preferred either that TgA is lower than 30˚C, since the polymer once molded may be gradually deformed when it is allowed to stand at room temperature higher than Tg in summer, etc.

In general, if a polymer with a low crystallization rate is quickly cooled from a molten state, it becomes amorphous, to provide a transparent molding. However, if the obtained molding is allowed to stand at a temperature higher than Tg, it is whitened. The reason is that since the crystallization of the polyester progresses, spherulites with a size larger than the visible light size are produced. A polymer with a low crystallization rate may not be preferred as the case may be, since crystallization (whitening) progresses with lapse of time if Tg is lower or near room temperature. To prevent the phenomenon, the crystallization rate of the polymer must be enhanced. A polyester as typified by polybutylene terephthalate (PBT) has a very high crystallization rate, and when molten PBT is quickly cooled, numerous crystallites smaller than the visible light size are produced already to allow clear crystallization. It is preferred that clear crystallization is achieved for such reasons that the whitening with lapse of time as described above can be inhibited and that handling properties and blocking resistance can also be improved.

Further, in view of having said clear crystallinity, it is preferred that the crystalline polyester of this invention is a polyester with a crystallization parameter $\Delta Tcg$ of lower than 60˚C. The crystallization parameter $\Delta Tcg$ refers to the difference (Tc - Tg) between the crystallization temperature (Tc) and the glass transition temperature (Tg). More particularly, $\Delta Tcg$ refers to the difference between the crystallization temperature (Tc) and the glass transition temperature (Tg) measured in the heating process of differential scanning calorimetry (DSC). Therefore, it is preferred that a polyester with $\Delta Tcg$ of lower than 60˚C is used as the polyester (a) of the layer A of this invention for such reasons that clear crystallization is possible, that whitening can be inhibited because of it, and that handling properties and blocking resistance can be improved.

The crystalline polyester of this invention can produce crystallites smaller than the visible light size in the cooling process by controlling the thickness after melt extrusion and the cooling temperature. Typical crystalline polyesters with $\Delta Tcg$ of lower than 60˚C include polybutylene terephthalate, polyhexamethylene terephthalate, polyethylene adipate, polyethylene sebacate, polybutylene adipate, polybutylene sebacate, polybutylene naphthalate and derivatives thereof such as copolymers. It is preferred that $\Delta Tcg$ is lower than 50˚C, since higher crystallinity can be obtained. Especially preferred is lower than 40˚C.

The polyester (a) constituting the layer A of the matt multilayer polyester film of this invention is a general term for a high molecular weight compound consisting of ester bonds.

Examples of the dicarboxylic acid as a component used for the ester bonds of the polyester (a) include aromatic dicarboxylic acids such as terephthalic acid, isophthalic acid, naphthalenedicarboxylic acid, diphenyldicarboxylic acid, diphenylsulfonedicarboxylic acid, diphenoxyethanedicarboxylic acid, 5-sodiumsulfoisophthalic acid and phthalic acid, aliphatic dicarboxylic acids such as oxalic acid, succinic acid, adipic acid, sebacic acid, dimer acid, maleic acid and fumaric acid, alicyclic dicarboxylic acids such as cyclohexynedicarboxylic acid, hydroxycarboxylic acids such as p-hydroxybenzoic acid.

In the polyester (a) used in the matt multilayer polyester of this invention, in view of control of $\Delta Tcg$ and $Tg$, productivity and cost, it is preferred that the rate of terephthalic acid and/or naphthalenedicarboxylic acid based on the amount of all the dicarboxylic acids as components is 80 mol% or more. More preferred is 85 mol% or more, and especially preferred is 95 mol% or more.

On the other hand, examples of the glycol as a component of the polyester (a) include ethylene glycol, 1,3-propanediol, 1,2-propanediol, 2-methyl-1,3-propanediol, 1,3-butanediol, 1,4-butanediol, 1,2-butanediol, 1,5-pentyl glycol, 2,2-dimethyl-1,3-propanediol, 2-ethyl-1,3-propanediol, 1,6-hexanediol, 2-methyl-2-ethyl-1,3-propanediol, 1,8-octanediol, 1,10-decanediol, 1,3-cyclobutanediol, 1,3-cyclobutanedimethanol, 1,3-cyclopentanedimethanol, 1,4-cyclohexanedimethanol, etc.

Among the glycols enumerated above, in the polyester (a) used in the matt multilayer polyester of this invention, in view of the control of $\Delta Tcg$ and $Tg$, productivity and cost, it is preferred that the rate of one or more diols selected from the group consisting of ethylene glycol, 1,3-propanediol and 1,4-butanediol is 80 mol% or more. Meanwhile, two or more of these dicarboxylic acids and two or more of these glycols can be used together as components. Above all, it is especially preferred that the glycol as a component is ethylene glycol and/or 1,4-butanediol.

In the matt multilayer polyester film of this invention, the incompatible resin (b) constituting the layer A is not especially limited, if the incompatible resin (b) can form fine projections and depressions on the surface of the polyester (a), to improve the matt effect. It is especially preferred that the incompatible resin (b) is a long chain aliphatic dicarboxylic acid copolyester, since an excellent matt effect can be obtained.

It is preferred that the long chain aliphatic dicarboxylic acid copolyester used as the incompatible resin (b) constituting the layer A and used also in the layer B is such that the dicarboxylic acids as components of the copolyester constitute hard segments mainly consisting of an aromatic dicarboxylic acid, etc. and soft segments mainly consisting of a long chain aliphatic dicarboxylic acid and that at least one or more glycols respectively with less than 10 carbon atoms are contained as components of the copolyester.

The aromatic dicarboxylic acid as a component constituting the hard segments in the long chain aliphatic dicarboxylic acid copolyester is an aromatic dicarboxylic acid or any of ester forming derivatives thereof. Examples of the aromatic carboxylic acid include isophthalic acid, terephthalic acid, diphenyl-4,4'-dicarboxylic acid, 2,6-naphthalenedicarboxylic acid, naphthalene-2,7-dicarboxylic acid, naphthalene-1,5-dicarboxylic acid, diphenoxyethane-4,4'-dicarboxylic acid, diphenylsulfone-4,4'-dicarboxylic acid, diphenylether-4,4'-dicarboxylic acid, and ester forming derivatives thereof, etc. Among them, terephthalic acid, isophthalic acid, naphthalenedicarboxylic acid and ester forming derivatives thereof.are preferred. Further, any one of these aromatic dicarboxylic acids can be used alone as a component or two or more of them can also be used together.

It is preferred that the amount of the aromatic carboxylic acid as a component of the long chain aliphatic dicarboxylic acid copolyester suitably used as the incompatible resin (b) is 60 to 99 mol% based on the amount of all the dicarboxylic acids as components of the long-chain aliphatic dicarboxylic acid copolyester used as the incompatible resin (b). A more preferred range is 65 to 97 mol%, and an especially preferred range is 70 to 95 mol%. If the amount of the aromatic dicarboxylic acid as a component is less than 60 mol%, crystallinity may decline and chemicals resistance may decline as the case may be. If the amount of the aromatic dicarboxylic acid as a component is more than 99 mol%, flexibility may not be able to be obtained as the case may be.

In the long chain aliphatic dicarboxylic acid copolyester of this invention used as the incompatible resin (b) and in the layer B, etc., in the case where the long chain aliphatic dicarboxylic acid used as a component constituting the soft segments is a long chain aliphatic dicarboxylic acid derivative represented by the following formula, it is preferred that the derivative is derived from an unsaturated fatty acid with 10 or more carbon atoms. Especially preferred is a long chain aliphatic dicarboxylic acid derivative with 10 to 30 carbon atoms. It can be obtained from a dimerized fatty acid (hereinafter simply expressed as a dimer) obtained mainly by dimerizing an unsaturated fatty acid or from an ester forming derivative of a dimer.

$$CH_3(CH_2)_m(CH=CH-CH_2)_k(CH_2)_nCOOR$$

(where R is a hydrogen atom or alkyl group; m is an integer of 1 to 25; k is an integer of 1 to 5; n is an integer of 0 to 25; and m, k and n satisfy the relational expression of $8 \leq m + 3k + n \leq 28$.)

In the dimerization reaction of an unsaturated fatty acid, a trimerized fatty acid (hereinafter simply expressed as a trimer) obtained by trimerizing the unsaturated fatty acid is produced together with the dimer. So, the long chain aliphatic dicarboxylic acid derivative obtained by the dimerization reaction of an unsaturated fatty acid contains a dimer, trimer and monomer. If a highly pure long chain aliphatic dicarboxylic acid derivative containing 95 wt% or more of the dimer, especially 98 wt% or more of the dimer obtained by purifying the long chain aliphatic dicarboxylic acid derivative by plural times of distillation, etc. is used, a copolyester good in view of color tone can be obtained. However, since the distillation process remarkably raises the cost of the long chain aliphatic dicarboxylic acid derivative, it is preferred in view of the compatibility between the color tone of the copolyester and cost that the long chain aliphatic dicarboxylic acid derivative contains 70 to 90 wt% of the dimer and 10 to 30 wt% of the trimer. That is, in the long chain aliphatic dicarboxylic acid copolyester of this invention used as the incompatible resin (b) and in the layer B, etc., it is preferred that the dimer content of the long chain aliphatic dicarboxylic acid is 70 to 90 wt% and that the trimer content is 10 to 30 wt%.

In the long chain aliphatic dicarboxylic acid derivative used for producing the long chain aliphatic dicarboxylic acid copolyester of this invention used as the incompatible resin (b) and in the layer B, etc., unsaturated bonds produced by the dimerization reaction of an unsaturated fatty acid exist. The long chain aliphatic carboxylic acid derivative containing the unsaturated bonds can be used as it is as a raw material for polymerization, or reduction by hydrogenation reaction can be performed before using the long chain aliphatic carboxylic acid derivative as a raw material. However, especially when heat resistance, weather resistance and transparency are required, it is preferred to use the dimer getting rid of the unsaturated bonds by hydrogenation.

It is preferred that the dimer of an unsaturated fatty acid as the long chain aliphatic dicarboxylic acid derivative that can be used for producing the long chain aliphatic dicarboxylic acid copolyester of this invention used as the incompatible resin (b) and in the layer B, etc. is a dimer acid as a dimer with 36 carbon atoms or a dimer acid derivative obtained by esterifying the dimer acid. A dimer acid is obtained by dimerizing an unsaturated fatty acid with 18 carbon atoms such as linoleic acid or linolenic acid. Such dimer acids are commercially available as "PRIPOL" and various ester forming derivatives thereof from Unichema International. Any one of the compounds can be used alone or two or more of them can also be used together.

In the long chain aliphatic dicarboxylic acid copolyester suitably used as the incompatible resin (b) of the layer A of this invention, it is preferred that the amount of the long chain aliphatic dicarboxylic acid as a component is 1 to 40 mol% based on the amount of all the dicarboxylic acids contained as components of the long chain aliphatic dicarboxylic acid copolyester used as the incompatible resin (b). A more preferred range is 3 to 35%, and a further more preferred range is 5 to 30 mol%.

If the amount of the long chain aliphatic dicarboxylic acid as a component is more than 40 mol% based on the amount of all the dicarboxylic acids contained as components of the long chain aliphatic dicarboxylic copolyester used as the incompatible resin (b), the heat resistance of the polyester may decline, and the mechanical properties of the molding obtained from the polyester may decline. On the other hand, if the amount of the long chain aliphatic dicarboxylic acid as a component is less than 1 mol% based on the amount of all the dicarboxylic acids contained as components of the long chain aliphatic dicarboxylic acid copolyester used as the incompatible resin (b), the incompatible resin (b) is likely to be compatible with the polyester (a), and the matt effect may become poor.

Further, the polyester (a) constituting the layer A of this invention can be copolymerized with said long chain aliphatic dicarboxylic acid, or may be mixed with a resin composed of another component, to such an extent that crystallinity is not impaired.

In the case where the incompatible resin (b) of the layer A of this invention is a long chain aliphatic dicarboxylic acid copolyester, it is preferred that at least one or more glycols with less than 10 carbon atoms are contained as components. Examples of the glycol with less than 10 carbon atoms include ethylene glycol, 1,3-propanediol, 1,2-propanediol, 2-methyl-1,3-propanediol, 1,3-butanediol, 1,4-butanediol, 1,2-butanediol, 1,5-pentyl glycol, 2,2-dimethyl-1,3-propanediol, 2-ethyl-1,3-propanediol, 1,6-hexanediol, 2-methyl-2-ethyl-1, 3-propanediol, 1,8-octanediol, 1,10-decanediol, 1,3-cyclobutanediol, 1,3-cyclobutanedimethyanol, 1,3-cyclopentanedimethanol, 1,4-cyclohexanedimethanol, etc. Among them, at least one or more selected from ethylene glycol, 1,3-propanediol and 1,4-butanediol are preferred. It is more preferred to use 1,4-butanediol as an essential component and to select one or more of ethylene glycol and 1,3-propanediol additionally. The reason why it is preferred to select plural glycols as components is that in the case where there is only one glycol as a component, crystallinity may become too high as the case may be owing to little disorder of polymer chains, and that if plural glycols are copolymerized as components, crystallinity can be controlled.

It is necessary that the melting point B of the layer B of this invention (hereinafter the melting point of the layer B is expressed as TmB) is 120 to 210˚C. So, as for the polyesters of the layer B, it is preferred that the copolyester as the main one of the polyesters of the layer B is a copolyester with a melting point of 120 to 210˚C. Though the other matters are not especially limited, it is more preferred in view of handling properties, control of melting point, film formability and productivity that the copolyester as the main one of the polyesters of the layer B is a long chain aliphatic dicarboxylic acid copolyester. In the case where the incompatible resin (b) constituting the layer A is a long chain aliphatic dicarboxylic acid copolyester, it is preferred in view of film formability and productivity that the main one of the polyesters of the layer B is the same long chain aliphatic dicarboxylic acid copolyester as that of the incompatible resin (b).

It is preferred that the main one of the polyesters of the layer B is a long chain aliphatic dicarboxylic acid copolyester as described above. In this case, it is preferred that the dicarboxylic acids of all the polyesters contained in the layer B as a whole include 90 mol% or more of aromatic dicarboxylic acids and long chain aliphatic dicarboxylic acids and that the glycols of all the polyesters contained in the layer B as a whole include 90 mol% or more of ethylene glycol and 1,4-butadiol, respectively as monomer components. It is more preferred that the dicarboxylic acids of all the polyesters contained in the layer B as a whole include 95 mol% or more of aromatic dicarboxylic acids and long chain aliphatic dicarboxylic acids and that the glycols of all the polyesters contained in the layer B as a whole include 95 mol% or more of ethylene glycol and 1,4-butadiol, respectively as monomer components. It is not preferred that the long chain aliphatic dicarboxylic acid copolyester included in the polyesters of the layer B does not assure that the dicarboxylic acids of all the polyesters contained in the layer B as a whole include 90 mol% or more of aromatic dicarboxylic acids and long chain aliphatic dicarboxylic acids or that the glycols of all the polyesters contained in the layer B as a whole include 90 mol% or more of ethylene glycol and 1,4-butadiol, respectively as monomer components, since handling properties, control of melting point, film formability and productivity may become poor.

Further, it is preferred that the main one of the polyesters of the layer B is a long chain aliphatic dicarboxylic acid copolyester and that the dicarboxylic acids of all the polyesters contained in the layer B as a whole include 60 to 99 mol% of aromatic dicarboxylic acids and 1 to 40 mol% of long chain aliphatic dicarboxylic acids, respectively as components. In view of handling properties, control of melting point, film formability and productivity, it is not preferred that the dicarboxylic acids of all the polyesters contained in the layer B as a whole include less than 60 mol% of aromatic dicarboxylic acid or more than 40 mol% of long chain aliphatic dicarboxylic acids, respectively as components. On the contrary, it is not preferred either that the amount of the aromatic dicarboxylic acids is more than 99 mol% or that the amount of the long chain aliphatic dicarboxylic acids is less than 1 mol%, since the glass transition temperature and the melting point TmB become so high as to make the thermal adhesion to polyvinyl chloride, etc. likely to be poor. It is more preferred that the dicarboxylic acids of all the polyesters contained in the layer B as a whole include 70 to 95 mol% of aromatic dicarboxylic acids and 5 to 30 mol% of long chain aliphatic dicarboxylic acids, respectively as components.

Further, it is preferred that at least one of the polyesters of the layer B contains at least one or more glycols respectively with less than 10 carbon atoms, as components. It is more preferred that the main one of the polyesters of the layer B contains at least one or more glycols respectively with less than 10 carbon atoms, as components. In this case, the amount of the glycols respectively with less than 10 carbon atoms can be decided arbitrarily. However, it is necessary that the main one of the polyesters of the layer B is a copolyester with a melting point of 120°C to 210°C, and to design the layer B with the melting point TmB kept in a range from 120 to 210°C, it is preferred that the amount of the glycols respectively with less than 10 carbon atoms is 50 to 100% based on the amount of all the glycols of all the polyesters contained in the layer B. A more preferred range is 60 to 100 mol%, and an especially preferred range is 70 to 100 mol%. On the other hand, it is preferred that the amount of the other glycols as components is less than 50 mol% based on the amount of all the glycols of all the polyesters contained in the layer B. A more preferred range is 0 to 40 mol%, and an especially preferred range is 0 to 30 mol%. In view of compatibility between the film formability and the thermal adhesion to polyvinyl chloride, it is preferred that the melting point TmB of the layer B is 120°C to 210°C. It is not preferred that the melting point TmB of the layer B is higher than 210°C, since the thermal adhesion becomes poor as the case may be. Further, lower than 120°C is not preferred either, since the film formability becomes poor as the case may be.

The long chain aliphatic dicarboxylic acid copolyester preferably used as the main one of the polyesters of the layer B of this invention can be copolymerized with another component or mixed with a resin composed of another component than the above-mentioned components to such an extent that the object of this invention is not impaired. Examples of copolymerizable dicarboxylic acids as other components include 1,4-cyclohexanedicarboxylic acid, 1,3-cyclohexanedicarboxylic acid, 1,2-cyclohexanedicarboxylic acid, 5-sodiumsulfoisophthalic acid, trimellitic acid, trimesic acid and ester derivatives thereof, and hydroxycarboxylic acids such as p-hydroxybenzoic acid, p-hydroxymethylbenzoic acid and ester derivatives thereof. Examples of glycols as other components include 1, 12-dodecanediol, diethylene glycol, polyoxyalkylene glycol, 1,2-cyclohexanediol, 1,3-cyclohexanediol, 1, 4-cyclohexanediol, spiro glycol, bisphenol A, bisphenol S, ethylene oxide addition products thereof, trimethylolpropane, etc.

It is preferred that the melt viscosities of the layers A and B of this invention are 1000 to 3000 poises at 250°C. A more preferred range is 1300 to 2300 poises. In the case where the melt viscosity of a polyester is higher than 3000 poises, when the polyester is extruded as a film or the like, the extrusion state may not be stabilized and the film thickness may become uneven. Further, partially thick portions may be whitened to show spots. Furthermore, if the melt viscosity is lower than 1000 poises, film formation may become difficult owing to insufficient viscosity.

To keep the melt viscosities of the layers A and B of this invention in a range from 1000 to 3000 poises at 250°C, it is preferred that the intrinsic viscosities of the polyesters such as the polyester (a) constituting the layer A of this invention and the copolyesters constituting the incompatible resin (b) and the layer B are in a range from 0.5 to 1.2. If the intrinsic viscosities of polyesters such as the polyester (a) constituting the layer A of this invention and the copolyesters constituting the incompatible resin (b) and the layer B are higher than 1.2, when the polyesters are extruded as films, the extrusion state may not be stabilized and the film thickness may become uneven. Further, partially thick portions may be whitened to show spots. Moreover, if the intrinsic viscosities are lower than 0.5, film formation may become difficult because of insufficient viscosity.

The method for producing said long chain aliphatic dicarboxylic acid copolyester of this invention is not especially limited, and an ordinary polyester production method can be used to produce the copolyester. For example, as one method, a composition containing respectively specific amounts of glycols, aromatic dicarboxylic acid and long chain aliphatic dicarboxylic acid derivative respectively as components can be directly copolymerized, or as another method, two or more polymers and/or copolymers can be melt-kneaded in an extruder to obtain said specific polymer composition.

In the latter method, an aromatic polyester consisting of an aromatic dicarboxylic acid and a glycol as components and an aliphatic-aromatic copolyester consisting of an aromatic dicarboxylic acid, a long chain aliphatic dicarboxylic acid derivative and glycols as components are melt-kneaded in an extruder, to obtain said specific polymer composition. In view of a cost advantage that a general purpose aromatic polyester such as polyethylene terephthalate (PET) or polybutylene terephthalate (PBT) can be used and in view of handling convenience that the components contained in the copolyester can be controlled as desired merely by changing the mixing amounts of an aromatic polyester and a copolymer, preferred is a method in which an aromatic polyester and an aliphatic-aromatic copolyester are melt-kneaded in an extruder for obtaining said specific polymer composition. More preferred is a method in which an aromatic polyester mainly consisting of "terephthalic acid and/or isophthalic acid and at least one selected from the group consisting of ethylene glycol, 1,3-propanediol and 1,4-butanediol, respectively as components" and an aliphatic-aromatic copolyester mainly consisting of "terephthalic acid, fatty acid or any of its derivatives, and at least one selected from the group consisting of ethylene glycol, 1,3-propanediol and 1,4-butanediol, respectively as components" are melt-kneaded in an extruder for obtaining said specific polymer composition. Further more preferred is a method in which an aromatic polyester mainly consisting of "terephthalic acid and/or isophthalic acid and ethylene glycol, respectively as components" and an aliphatic-aromatic copolyester mainly consisting of "terephthalic acid, fatty acid or any of its derivatives and 1,4-butanediol, respectively as components" are melt-kneaded in an extruder for obtaining said specific polymer composition.

For enhancing the melt viscosity of the copolyester obtained by copolymerization and the compatibility of the polyester resin molding, it is preferred to add any of the following compatibilizing agents at the time of copolymerization or at the time of resin mixing. The compatibilizing agent can be a compound reactive with hydroxyl groups and/or carboxyl groups. Examples of it include various glycidyl compounds such as hexahydrophthalic acid diglycidyl, terephthalic acid diglycidyl, phthalic acid diglycidyl, bisphenol S diglycidyl ether and polyethylene glycol diglycidyl ether, various oxazolines such as 1,4-phenylene-bis-oxazoline and 1,3-phenylene-bis-oxazoline, various ester compounds consisting of any of various fatty acids such as stearic acid, oleic acid and lauric acid and any of polyethers, and organic acids such as hydrochloric acid, sulfuric acid, nitric acid and p-toluenesulfonic acid. Above all, it is preferred to use a bis oxazoline or p-toluenesulfonic acid. The mechanism in which the addition of any of said compounds can enhance the melt viscosity or compatibility is not clearly known.

Further, this invention is not restricted by any specific mechanism or hypothesis, but can also be explained, for example, by the models as described later.

The composition constituting the polyester film as the layer A of the matt multilayer polyester film of this invention can further contain a thermoplastic resin (c) and/or an inorganic filler (d).

In this invention, the thermoplastic resin (c) must be a polymer incompatible with the polyester (a) of the layer A. Examples of the polymer include polyolefins such as polyethylene and polypropylene, polyesters such as polyethylene terephthalate, polypropylene terephthalate, polybutylene terephthalate and polyethylene naphthalate, polyamides such as nylon 6, alicyclic polyolefins, polyallylates, polycarbonates, polyether sulfones, polysulfones, etc. Any one of these polymers can be used alone or two or more of them can also be used as a copolymer or a polymer blend. Among them, preferred examples of the thermoplastic resin (c) are polyolefins, polyesters, polyamides and copolymers thereof. The copolyester used as the thermoplastic resin (c) can be a copolyester incompatible with the copolyester used as the polyester (a) of the layer A, etc. The copolyester can, for example, a copolyester obtained by using terephthalic acid or/and dimer acid or dodecanedioic acid as dicarboxylic acid(s) and ethylene glycol or/and butanediol as glycol(s).

In view of matt effect, as the thermoplastic resin (c), especially a polyolefin or polyamide can be preferably used. Further, as the copolyester used as the thermoplastic resin (c), a dimer acid copolyester or a dodecanedionic acid copolyester can be preferably used in view of matt effect.

In this invention, examples of the inorganic filler (d) include clay minerals such as calcium carbonate, magnesium carbonate, barium sulfate, silica, talc, clay, kaolin, sericite, glass flakes, mica, smectites and vermiculite. Among them, talc, silica and mica are preferred in view of miscibility with polyesters and matt film formability. Any one of these inorganic fillers can be used alone or two or more of them can also be used as a mixture. Further, any of these inorganic fillers can also be used as it is or after it has been treated, as required, on the surface with a surfactant or silane coupling agent, etc. It is preferred that the average particle size of the particles of the inorganic filler is less than 10 $\mu$m. More preferred is less than 5 $\mu$m, and especially preferred is less than 4 $\mu$m. The lower limit is not especially limited, but is about 0.1 $\mu$m in view of cost.

In this invention, the inorganic filler (d) and the thermoplastic resin (c) can also be used together.

The polyester of the layer A consists of the polyester (a) and the incompatible resin (b), and it is preferred that the mixing ratio of the polyester (a) and the incompatible resin (b) is 60 to 95 wt% of the polyester (a) and 5 to 40 wt% of the incompatible resin (b). It is not preferred that the amount of the incompatible resin (b) is less than 5 wt%, since the matt effect may decline, and it is not preferred either that that amount of the incompatible resin (b) is more than 40 wt%, since the amount of the polyester (a) decreases to lower heat resistance as the case may be.

It is more preferred that the polyester of the layer A consists of the polyester (a), the incompatible resin (b) and/or the thermoplastic resin (c) and/or the inorganic filler (d), and that the mixing ratio of the polyester (a), the incompatible resin (b), the thermoplastic resin (c) and the inorganic filler (d) is 60 to 90 wt% of the polyester (a), 5 to 20 wt% of the incompatible resin (b), and 5 to 20 wt% of the thermoplastic resin (c) and/or the inorganic filler (d). The addition of the thermoplastic resin (c) to the polyester (a) and the incompatible resin (b) is preferred, since the matt effect is better than that achieved by using the polyester (a) and the incompatible resin (b) only. It is preferred that the inorganic filler (d) is further added, since the matt film obtained can be prevented from being de-matted at the time of heating for high temperature embossing or heat sealing.

It is further more preferred that the polyester of the layer A consists of the polyester (a), the incompatible resin (b) and/or the thermoplastic resin (c) and/or the inorganic filler (d) and that the mixing ratio of the polyester (a), the incompatible resin (b), the thermoplastic resin (c) and the inorganic filler (d) is 65 to 85 wt% of the polyester (a), 10 to 20 wt% of the incompatible resin (b) and 5 to 15 wt% of the thermoplastic resin (c) and/or the inorganic filler (d).

The mixing ratio of the polyester (a), the incompatible resin (b) and/or the thermoplastic resin (c) and/or the inorganic filler (d) in the layer A formed as a film can be obtained by the following method. For example, the layer A is separated by shaving off from the film, and in succession, any of various analytical means such as chromatography like GPC or NMR can be used to confirm the mixing ratio in the layer A. In succession, the incompatible resin (b) can be separated by chromatography such as gel permeation chromatography (GPC), and any of various analytical means such as nuclear magnetic resonance measurement (NMR) can be used without or after hydrolysis, to identify the composition ratio of the incompatible resin (b). Similarly the other components such as the polyester (a) and the composition ratio of the layer B can also be confirmed. The amount of the inorganic filler (d) can be confirmed by burning at 600 to 700˚C for incineration and weighing.

In this invention, as one method for melt-kneading the polyester (a), the incompatible resin (b) and/or the thermoplastic resin (c) and/or the inorganic filler (d), they can be kneaded beforehand using a twin-screw extruder or Brabender Plastograph, etc. and subsequently molded. As another method, they can be supplied directly into any of various molding machines, to be molded while being kneaded in the molding machine. As a further other method, highly concentrated master pellets are once prepared using an extruder, and a resin obtained by diluting it to about 1/1 to about 1/30 can be melt-extruded and molded. For more uniformly dispersing the inorganic filler, a metal soap such as sodium stearate, magnesium stearate or zinc stearate, ethylenebis fatty acid amide or polyethylene wax can also be added as a dispersing agent. Further, an antioxidant or ultraviolet light absorber can also be added. The order of kneading is not especially limited. The polyester (a), the incompatible resin (b) and/or the thermoplastic resin (c) and/or the inorganic filler (d) can be kneaded simultaneously. As another method, the polyester (a) and the incompatible resin (b) can be kneaded at first, and the thermoplastic resin (c) and/or the inorganic filler (d) can be kneaded with the mixture. As a further other method, the polyester (a) and the inorganic filler (d) and/or the thermoplastic resin (c) can be mixed at first, and the incompatible resin (b) such as a long chain aliphatic dicarboxylic acid copolyester can be kneaded with the mixture. As a still further other method, a long chain aliphatic dicarboxylic acid copolyester as the incompatible resin (b) and the inorganic filler and/or the thermoplastic resin (c) can be kneaded at first, and the polyester (a) can be kneaded with the mixture.

For enhancing the melt viscosity of the copolyester obtained by copolymerization and the transparency of the polyester resin molding, it is preferred to add any of the following compatibilizing agents at the time of copolymerization or at the time of resin mixing. The compatibilizing agent can be a compound reactive with hydroxyl groups and/or carboxyl groups. Examples of it include various glycidyl compounds such as hexahydrophthalic acid diglycidyl, terephthalic acid diglycidyl, phthalic acid diglycidyl, bisphenol S diglycidyl ether and polyethylene glycol diglycidyl ether, various oxazolines such as 1,4-phenylene-bis-oxazoline and 1,3-phenylene-bis-oxazoline, various ester compounds consisting of any of various fatty acids such as stearic acid, oleic acid and lauric acid and any of polyethers, and organic acids such as hydrochloric acid, sulfuric acid, nitric acid and p-toluenesulfonic acid. Above all, it is preferred to use a bis oxazoline or p-toluenesulfonic acid. The mechanism in which the addition of any of said compounds can enhance the melt viscosity or transparency is not clearly known.

Further, this invention is not restricted by any specific mechanism or hypothesis, but can also be explained, for example, by the following models.

[Bis oxazoline addition effect]

If a bis oxazoline as a bifunctional compound is added, the ends of the carboxylic acid in the copolyester chains react with each other to increase the molecular weight as one of major factors for enhancing the melt viscosity. Further, in the case where an aromatic polyester and an aliphatic-aromatic copolyester consisting of an aromatic dicarboxylic acid, a long chain aliphatic dicarboxylic acid derivative and a glycol as components are melt-kneaded to obtain a copolyester or a film thereof, the two types of functional groups of the bis oxazoline are respectively added to the carboxylic acid ends of dissimilar polymers (for example, the aromatic polyester and the aliphatic-aromatic copolyester), to produce a block copolymer, and this block copolymer enhances the compatibility between the dissimilar polymers, for enhancing transparency.

[Organic acid addition effect]

In the case where an aromatic polyester and an aliphatic-aromatic copolyester are melt-kneaded to produce a copolyester or a film or molding thereof, the acid catalyst effect of an organic acid promotes the ester interchange reaction between the dissimilar polymers, for promoting the production of the copolyester and for homogenizing the polymer chains, to enhance transparency.

In the case where the above-mentioned compatibilizing agent is added to a copolyester, the added amount of it is such as to keep the melt viscosity at a desired viscosity level and to achieve desired transparency. In general, it is preferred that the amount is 0.1 to 5 wt%. Further, in the case where the compatibilizing agent is added to said polyester resin composition, generally it is preferred that the added amount is 0.1 to 5 wt%.

The matt multilayer polyester film of this invention is a film obtained by adding, as required, various particles and additives to said copolyester and forming a film according to an ordinary method. It can be produced, for example, by melt-extruding, cooling for solidification, stretching as required and applying heat treatment.

The particles added to the matt multilayer polyester film are selected to suit each purpose and application, and are not especially limited as far as the effects of this invention are not impaired. The particles can be inorganic particles, organic particles, crosslinked polymer particles or internal particles produced in the polymerization system, etc. Two or more types of these particles can also be added together. In view of the mechanical properties of the polyester resin composition, it is preferred that the added amount of the particles is 0.01 to 10 wt%. A more preferred range is 0.02 to 1 wt%.

Further, it is preferred that the number average particle size of the added particles is 0.001 to 10 $\mu$m, and a more preferred range is 0.01 to 2 $\mu$m. If the number average particle size is kept in this preferred range, defects are unlikely to occur in the resin composition and the film, and the degradation of transparency and the deterioration of moldability are unlikely to be caused.

The inorganic particles are not especially limited. It is possible to use fine particles of any of various carbonates such as calcium carbonate, magnesium carbonate and barium carbonate, various sulfates such as calcium sulfate and barium sulfate, various composite oxides such as kaolin and talc, various phosphates such as lithium phosphate, calcium phosphate and magnesium phosphate, various oxides such as aluminum oxide, silicon oxide, titanium oxide and zirconium oxide, various salts such as lithium fluoride, etc.

Further, the organic particles used can be fine particles of any of calcium oxalate and the terephthalate of calcium, barium, zinc, manganese and magnesium, etc. The crosslinked polymer particles can be fine particles of any of homopolymers and copolymers of divinylbenzene, styrene and vinyl monomers of acrylic acid and methacrylic acid. In addition, organic fine particles of any of polytetrafluoroethylene, benzoguanamine resin, thermosetting epoxy resins, unsaturated polyester resins, thermosetting urea resins and thermosetting phenol resins, etc. can also be preferably used.

As the internal particles produced in the polymerization system, it is possible to use the particles produced by a publicly known method of adding an alkali metal compound or alkaline earth metal compound, etc. into the reaction system and further adding a phosphorus compound.

In view of giving an antimicrobial effect, it is preferred to add an antimicrobial agent to the matt multilayer polyester film of this invention. The antimicrobial agent used can be zeolite, glass or silica gel, etc. respectively containing metal ions of silver, copper, zinc, aluminum or magnesium, etc., or titanium oxide as a photocatalyst. Among them, zeolite or glass respectively containing metal ions of silver, copper or zinc is preferred in view of sustained antimicrobial effect. It is preferred that the added amount of the antimicrobial agent is 0.05 to 5 wt% and that the average particle size of the antimicrobial agent is 1 to 50 $\mu$m. A commercially available inorganic antimicrobial agent, "Zeomic" produced by Sinanen Zeomic Co., Ltd. is also one of preferred antimicrobial agents.

The matt multilayer polyester film of this invention can contain, as required, appropriate amounts of publicly known additives, for examples, a flame retarder, thermal stabilizer, antioxidant, ultraviolet light absorber, antistatic agent, plasticizer, tackifier, organic lubricant such as fatty acid ester or wax, defoaming agent such as polysiloxane, and colorant such as pigment or dye.

The matt multilayer polyester film of this invention is required to consist of at least two layers A and B. The layer A mainly consists of a crystalline polyester (a), for contributing to fouling resistance and chemicals resistance. Further, the layer A is excellent in matt effect owing to the effect of the incompatible resin (b) {further owing to the effect of the thermoplastic resin (c) and/or the inorganic filler (d)}. Furthermore, if the layer A has a glass transition temperature TgA of 30°C to 70°C, the layer A also has embossability (moldability). On the other hand, since the main one of the polyesters of the layer B is a copolyester with a melting point TmB of 120°C to 210°C, the layer B is excellent in thermal adhesion.

Moreover, in general, if a non-oriented polyester film is allowed to stand at room temperature, the film is likely to decline in breaking extension and to become fragile because of the phenomenon called volume relaxation or enthalpy relaxation. The fragile film is likely to cause such a problem as film breaking in the subsequent steps of slitting, sticking, etc., as the case may be. So, if the polyesters of the layer B with a glass transition temperature of lower than room temperature are laminated, the temporal fragility can be inhibited. So, it is preferred that the polyesters of the layer B have a glass transition temperature of lower than room temperature.

The layers A and B are functionally different as described above, and since they are laminated in this invention, the laminate can have the functions necessary as a surface layer film of wallpaper. So, the film of this invention must consist of at least two layers A and B. Further, the film can further have a layer with additional functions such as slipperiness, thermal adhesion, stickiness, heat resistance and weather resistance laminated on the surface, and the thickness ratio of the respective layers can also be decided arbitrarily.

It is preferred that the multilayer polyester film of this invention has an elastic modulus kept in a range from 1 to 1000 MPa at 25°C. If the elastic modulus is in this preferred range, the film is small in deformation and does not raise any problem in handling, being excellent in low temperature moldability. As a method for keeping the elastic modulus in a range from 1 to 1000 MPa at 25°C, the content of the long chain aliphatic dicarboxylic acid as a component of the long chain aliphatic dicarboxylic acid copolyester used can be changed as required, or a long chain aliphatic dicarboxylic acid with a high softening effect can also be used.

The matt multilayer polyester film of this invention can be a non-oriented film or an oriented film. The oriented film can be either a monoaxially oriented film stretched in either the machine direction or the transverse direction of the film or a biaxially oriented film stretched in both the machine direction and the transverse direction of the film.

It is preferred in view of processability such as embossability, that the matt multilayer polyester film of this invention has a plane orientation coefficient of 0.00 to 0.05. A preferred plane orientation coefficient range is 0.00 to 0.04. As a method for obtaining a film with a plane orientation coefficient of 0.00 to 0.05, a non-oriented film can be used. Even a non-oriented film is drafted when the film is formed and is rather oriented in the machine direction as the case may be. So, to keep the plane orientation coefficient in a range from 0.00 to 0.05, it is important to inhibit orientation even in the case of no stretching. It is not preferred that the plane orientation coefficient is more than 0.05, since the processability in the machine direction may become different from the processability in the transverse direction.

In this specification, the plane orientation coefficient (fn) refers to the value calculated from the following formula using the refractive index values in the machine direction, the transverse direction and the thickness direction of the film (respectively Nx, Ny and Nz) measured using an Abbe refractometer, etc.

$$\bullet \text{ Plane orientation coefficient } fn = (Nx + Ny)/2 - Nz$$

In the case where the machine direction and the transverse direction of the film cannot be identified, the direction having the largest refractive index in the plane of the film can be identified as the machine direction, and the direction perpendicular to the machine direction in the plane of the film can be identified as the transverse direction, the direction perpendicular to the plane of the film being able to be identified as the thickness direction, for obtaining the plane orientation coefficient (fn). The direction having the largest refractive index in the plane of the film can be identified by measuring the refractive index values in all directions of the plane using an Abbe refractometer or can be identified by deciding the lag phase axis direction, for example, using a phase difference measuring instrument (birefringence measuring instrument), etc.

Further, in view of thermal adhesion and processability, especially the inhibition of film wrinkling during processing, it is preferred that the heat shrinkage percentage of the matt multilayer polyester film of this invention at least in one direction at the molding temperature is in a range from -10 to 10%. A more preferred heat shrinkage percentage range is -5 to +5%. If the heat shrinkage percentage is in this range, such problems that the film surface is swollen to impair its appearance, that the film is separated from the substrate and that the printing is deformed do not arise to assure good processability.

The matt multilayer polyester film of this invention can be treated on the surface with corona discharge, etc., to be improved in thermal adhesion and printability as required. Further, any of various types of coating can be applied, and the coating compound, coating method and thickness are not especially limited to such an extent that the effects of this invention are not impaired. Furthermore, as required, the film can be molded, for example, embossed, or printed, etc., to be used.

In this invention, the surface glossiness of the layer A of the matt multilayer polyester film is required to be 0% to less than 50%. A suitable range is 0% to less than 45%, and a more suitable range is 0% to less than 40%. If the surface glossiness is more than 50%, the matt multilayer polyester film is unsatisfactory. Further, since the layer A surface is required to be matt in the matt film, it is preferred that the surface glossiness is as lower as possible below 50%, and the lower limit is not especially specified. However, actually a surface glossiness of less than 2% is difficult.

Furthermore, the inorganic filler can be dispersed when the polyester is produced by polymerization, or when the long chain aliphatic dicarboxylic acid copolyester is produced by polymerization.

The thickness of the film can be decided freely to suit each application. The thickness is usually in a range from 5 to 100 $\mu$m. In view of film formation stability, a preferred thickness range is 5 to 60 $\mu$m. A more preferred range is 10 to 50 $\mu$m.

In the matt multilayer polyester film of this invention, the thickness of the layer A with a surface glossiness of less than 50% at least on one side is not especially limited. A suitable thickness range is 3 to 50 $\mu$m, and a more suitable range is 10 to 30 $\mu$m. For example in the case where the matt multilayer polyester film is bonded to polyvinyl chloride, in view of productivity, the likelihood that the matt film is broken of at the time of embossing, and the insufficient interruption of the plasticizer migrating from the polyvinyl chloride, it is not preferred that the thickness of this composition layer is less than 3 $\mu$m. On the contrary, in view of flexibility, folding creases, curling and cost, it is not preferred that the thickness is more than 50 $\mu$m.

In the matt multilayer polyester film of this invention, in view of adhesion to the wallpaper board substrate, it is preferred that the thickness of the layer B is 2 $\mu$m or more. The upper limit of the thickness is 30 $\mu$m, in view of the embossability of the layer A. A more preferred range is 5 to 20 $\mu$m.

The matt multilayer polyester film of this invention can be obtained by a melt extrusion method such as T die method or inflation method. For example in the case where the film is obtained by a T die method, it is an important condition that the extruded film is quickly cooled. If the film is slowly cooled, the glossiness increases and a matt film cannot be obtained. For quick cooling, the air gap of the die is kept small, and an air slit and a casting roll are used.

As a typical application of the matt multilayer polyester film of this invention, the matt multilayer polyester film of this invention is laminated on a wallpaper board substrate. In this specification, the wallpaper board substrate is a general term meaning a substrate obtained by laminating a polyvinyl chloride resin layer or a polyolefin resin layer, etc. on a support formed of flame retardant paper, nonwoven fabric or glass fibers, etc. by calendering or coating, etc., or a laminate obtained like this and further printed, or a polyvinyl chloride foam obtained by mixing an expanding agent with polyvinyl chloride and expanding the mixture at a ratio of 1.5 to 15 times, or a decorative sheet, or a polyvinyl chloride steel sheet, or an incombustible polyvinyl chloride sheet, or a polyvinyl chloride decorative sheet. When the matt multilayer polyester film of this invention is laminated on any of these wallpaper board substrates, it is preferred that the matt multilayer polyester film is laminated with the layer A as the outer surface.

The matt multilayer polyester film of this invention is laminated on a wallpaper board substrate, for effective use as a laminate. Examples of the resin of the wallpaper board substrate include polyvinyl chloride, especially polyvinyl chloride containing a plasticizer, polyolefins (polyethylene, polypropylene, etc.), polystyrene, polyesters, polyamides, etc. Preferred are polyolefins and polyvinyl chloride.

The method for obtaining the laminate consisting of the matt multilayer polyester film of this invention and the wallpaper board substrate can be either dry lamination or hot lamination. In the case where the resin of the wallpaper board substrate is polyvinyl chloride, it is preferred that embossing and thermal adhesion can be performed simultaneously. The thermal adhesion temperature range is 100 to 160°C. In the case where the resin of the wallpaper board substrate is a polyolefin, it is preferred to use an adhesive.

The laminate (wallpaper board) of this invention obtained as described above does not change in adhesive strength even after use for a long period of time and further maintains such functions as fouling resistance, chemicals resistance and embossability. It does allow heating to cause de-matting especially in the case where an inorganic filler is mixed in the polyester of the layer A. So, the laminate is very useful as a wallpaper board.

The matt multilayer polyester film of this invention can be used in various industrial materials and packaging materials requiring moldability, as a single sheet or a composite sheet. The composite sheet can be obtained by sticking the matt multilayer polyester film of this invention to a substrate formed of a metal, wood or paper, or a substrate such as a resin sheet or resin board.

Particular applications of the matt multilayer polyester film of this invention include the conventional applications such as flexible films and moldable films, for example, packaging films, wrapping films, stretchable films, architectural films such as partition films, wallpaper boards and plywood decorative sheets, especially preferably wallpaper films, though not limited to those enumerated here.

[Examples]

This invention is explained below in detail in reference to examples. Respective properties were measured and evaluated according to the following methods.

(1) Composition ratio of the monomer, dimer and trimer in a long chain aliphatic dicarboxylic acid (derivative)

A fatty acid (derivative) was analyzed by high performance liquid chromatography, and the composition ratio was obtained from the peak areas of respective components. Known measuring conditions can be used, and an example of the conditions is shown below.

Column: Interstil ODS-3, 2.0 mm diameter x 250 mm

Mobile phase: $H_3PO_4$ aqueous solution/methanol =80/20 - (20 min)

20/80 - (40 min)

Flow velocity: 0.4 mL/min

Column temperature: 45˚C

Detector: Photo diode array (200 to 400 nm)

21512 used as chromatogram

In the case where the composition ratio of the monomer, dimer and trimer in a long chain aliphatic dicarboxylic acid (derivative) of a film is obtained, the following method can be used. The layers A and B of the film are separated, for example, by shaving off, and chromatography such as gel permeation chromatography (GPC) or nuclear magnetic resonance (NMR) measurement, etc. is used to identify the long chain aliphatic dicarboxylic acid (derivative) and to obtain the composition ratio of the monomer, dimer and trimer thereof.

(2) Intrinsic viscosity of polyester

A polyester was dissolved into orthochlorophenol, for measuring at 25˚C.

(3) Melt viscosity of polyester or polyester resin composition

The pellets of the polyester constituting the layer A or B were dried in vacuum at 150˚C for more than 5 hours, and the melt index was measured at 250˚C for obtaining the melt viscosity.

(4) Film formation stability

The stability in the formation of a multilayer polyester film was judged according to the following criterion. (○ and △ are satisfactory levels in conformity with this invention.)

○ (Good) : The discharge quantity was so constant as to allow stable film formation.

△ (Acceptable): The discharge quantity was temporarily unstable, but there was little problem in film formation.

X (Unacceptable): The discharge quantity was evidently unstable, and stable film formation was difficult.

(5) Thermal properties (DSC)

Differential scanning calorimeter DSCII produced by Seiko Instruments Inc. was used to heat 5 mg of a sample at a rate of 10˚C/min, for measuring the glass transition temperature (Tg), crystallization temperature (Tc) and melting point (Tm). These values were obtained in the first heating process. Further, the crystallization rate △Tcg was obtained from the following formula:

$$\Delta Tcg = Tc - Tg$$

For obtaining the Tg, Tc, Tm and △Tcg of each layer in the film, the layers A and B were separated, for example, by shaving off, and subsequently the respective temperatures were measured according to the methods described above.

(6) Matt effect of film

The glossiness of a matt multilayer polyester film was measured using digital variable angle glossimeter UGD-5D produced by Suga Test Instruments Co., Ltd. at an incident angle and a detection angle of respectively 60˚ from the normal to the film surface at arbitrary 20 places on the surface of the layer A of the film, and the mean value of the glossiness values was obtained. The matt effect was evaluated based on the mean value of the glossiness values according to the following criterion. (○ and △ are satisfactory levels in conformity with this invention.)

○ (Good): Less than 10% in glossiness

△ (Acceptable): 10 to 50% in glossiness

X (Unacceptable): More than 50% in glossiness

(7) Plane orientation coefficient (fn)

An Abbe refractometer produced by Atago Co., Ltd. was used to measure the refractive index of a film with sodium D line (wavelength 589 nm) as the light source. With the largest value of the refractive index in the plane of the film as Nx, the refractive index Ny in the horizontally perpendicular to the direction having Nx and the refractive index Nz in the thickness direction were obtained. The plane orientation coefficient (fn) was obtained from the following formula:
$$fn = (Nx + Ny)/2 - Nz$$

(8) Temporal fragility resistance (breaking extension) of film

A film was allowed to stand at a temperature of 23°C and at a relative humidity of 65% for 1 week, and the breaking extension was measured at 23°C using Tensilon produced by Orientec Co., Ltd. A sample with a width of 10 mm and a length of 100 mm was obtained from the film kept at the measuring temperature for 30 seconds, and breaking extension values (%) were measured at a stress rate of 200 mm/min in the machine direction and the transverse direction of the film respectively at 10 places. The mean value of the measured breaking extension values was obtained, and the temporal fragility resistance was evaluated based on the means value according to the following criterion. (○ and Δ are satisfactory levels in conformity with this invention.)
○ (Good): More than 100% in breaking extension
Δ (Acceptable): 10 to 100% in breaking extension
X (Unacceptable): Less than 10% in breaking extension

(9) Embossability (moldability) of film

A film preheated to 130°C was run in pressure contact with an embossing roll (pressure $9.8 \times 10^4$ N/m$^2$, speed 4 m/min), to transfer the projections and depressions formed on the surface of the embossing roll to the surface of the layer A of the film. The surface of the embossing roll was observed using an ultra-depth shape measuring microscope (produced by Keyence Corporation), to obtain the area {S1(i)} at the top of one arbitrary projection. In succession, the depression formed on the surface of the film by the observed projection was observed using the ultra-depth shape measuring microscope, to obtain the area {S2(i)} of the bottom of the depression transferred to the film. Similarly, the areas at arbitrary 10 places (i = 1 to 10) were obtained, and the mean values S1 and S2 of 10 places were obtained. The ratio of the mean value S2 to the mean value S1 { (S2/S1) x 100} was defined as the "transfer rate," and the embossability was evaluated according to the following criterion. (○ and Δ are satisfactory levels in conformity with this invention.)
○ (Good): More than 70% in transfer rate
Δ (Acceptable): 40 to 70% in transfer rate
X (Unacceptable): Less than 40% in transfer rate

(10) Water vapor barrier property (gas barrier property)

Water vapor permeability meter "PERMATRAN" W3/31 produced by Modern Control was used to measure the water vapor permeability at a temperature of 37.8°C and at a relative humidity of 100%. This measurement was made using 5 samples (n = 5). The mean value of the measured values was expressed in g/(m$^2$·day). The measurement was made from the surface of the layer A. The water vapor barrier property was evaluated based on the mean value of the measured water vapor permeability values according to the following criterion. (○ and Δ are satisfactory levels in conformity with this invention.)
○ (Good): Less than 100 g/(m$^2$·day) in water vapor permeability
Δ (Acceptable): 100 to 200 g/(m$^2$·day) in water vapor permeability
X (Unacceptable): More than 200 g/(m$^2$·day) in water vapor permeability

(11) Preparation of wallpaper board

A mixture consisting of 100 parts by weight of PVC resin ("Paste Resin P450D" produced by V-Tech Corporation), 50 parts by weight of calcium carbonate ("Nanox #30" produced by Maruo Calcium Co., Ltd.) as a filler, 55 parts by weight of bis(2-ethylhexyl) phthalate ("DOP" produced by Daihachi Chemical Industry Co., Ltd.) as a plasticizer, 20 parts by weight of titanium oxide ("KRONOS KA-20" produced by Chitan Kogyo K.K.) as a pigment, 3 parts by weight of tricresyl phosphate ("TCP" produced by Daihachi Chemical Industry Co., Ltd.) as a flame retarder, 2 parts by weight of Ca/Zn-based stabilizer ("CZ Series" produced by Nissan Chemical Industries, Ltd.) as a stabilizer, 2 parts by weight of p,p'-oxybisbenzenesulfonyl hydrazide ("Cellmike S" produced by Sankyo Chemical Co., Ltd. ) as a foaming agent, and 2 parts by weight of an organic metal pyridine-based compound ("Amorden TMS-32" produced by Daiwa Chemical Industries Co., Ltd.) as an antimicrobial agent was laminated on a flame retardant paper sheet for lining obtained by impregnating 100 parts by weight of architectural paper ("KPK #120" produced by Yupo Corporation) with 20 parts by weight of guanidine sulfamate ("APINON-145" produced by Sanwa Chemical Co., Ltd.) as a flame retarder, and the laminate was heated at 230˚C for 1 minute for foaming PVC, to obtain a PVC wallpaper board substrate. Then, the surface of the layer B of a matt multilayer polyester film and the surface of the PVC resin laminated on paper were arranged to face each other, and the film and the substrate were pressure-bonded at 130˚C using an embossing roll (pressure 4. 9 x $10^4$ N/m$^2$, speed 4 m/min), and subsequently thermally bonded and embossed simultaneously to obtain a wallpaper board.

(12) Fouling resistance

A felt pen of black oil ink {"Magic Ink" (registered trademark), solid black}, soy sauce (Kikkoman Rich Soy Sauce produced by Kikkoman Corporation), coffee, crayon, curry and starch were applied to the surface (the surface of the layer A) of the wallpaper board prepared in the above (11) each in a section with a size of 2 cm x 2 cm, and allowed to stand at a temperature of 23˚C and at a relative humidity of 65% for 24 hours, then being wiped away using gauze impregnated with ethyl alcohol. The fouling resistance was evaluated according to the following criterion. (○ and Δ are satisfactory levels in conformity with this invention.)
○ (Good) : No contaminant marks remained on the surface of the film.
Δ (Acceptable): Contaminant marks remained on the surface of the film, but there was no practical problem.
X (Unacceptable) : Contaminant marks remained on the surface of the film.

(13)Chemicals resistance

The surface (the surface of the layer A) of a wallpaper board prepared in the above (11) was carefully wiped using gauze impregnated with the undiluted solution of a chlorine-based detergent ("Kitchen Heiter" produced by Kao Corporation), and further wiped using gauze impregnated with water and then dry gauze. The chemicals resistance was evaluated according to the following criterion. (○ and Δ are satisfactory levels in conformity with this invention.)
○ (Good): No chemical marks remained on the surface of the film.
Δ (Acceptable) : Chemical marks remained on the surface of the film, but there was no practical problem.
X (Unacceptable): Chemical marks remained on the surface of the film.

(14) Thermal adhesion to PVC

The wallpaper board prepared in the above (11) was cut to a size of 3 cm wide x 10 cm long. A "Cellophane Tape" was stuck to the surface layer film at a pressure of 9.8 x $10^4$ N/m$^2$, and the laminate was allowed to stand at a temperature of 23˚C and at a relative humidity of 65% for 24 hours. The "Cellophane Tape" was peeled using Tensilon produced by Orientec Corporation at a measuring temperature of 23˚C and at a stress rate of 200 mm/m, to measure the peel strength. This measurement was made using 10 samples (n = 10). The mean value of the measured peel strength values was obtained. The thermal adhesion of the surface layer film to the PVC layer was evaluated according to the following criterion. (○ and Δ are satisfactory levels in conformity with this invention.)
○ (Good) : The "Cellophane Tape" peeled from the surface layer film, or peeling occurred at the interface between the surface layer film and the PVC foam layer.
Δ (Acceptable): Peeling occurred at the interface between the surface layer film and the PVC foam, but there was no practical problem, since the peel strength was 2 x $10^7$ N or more.
X (Unacceptable): Peeling occurred at the interface between the surface layer film and the PVC foam, and the peel strength was less than 2 x $10^7$ N.

(15) Matt effect after embossing

For evaluating the matt effect after embossing, the glossiness of the surface of the wallpaper board prepared in the above (11) was measured using digital variable angle glossimeter UGD-5D produced by Suga Test Instruments Co., Ltd. at an incident angle and a detection angle of respectively 60˚ from the normal to the film surface at arbitrary 20 places on the surface of the wallpaper board. The mean value and the standard deviation of the measured glossiness values were obtained. The reason why the standard deviation was used was that if de-matting occurred after embossing, the glossiness could fluctuate greatly. The matt effect after embossing was evaluated based on the mean value and standard deviation of the measured glossiness values according to the following criterion. (○ and Δ are satisfactory levels in conformity with this invention.)

○ (Good): Less than 10% in the mean value of glossiness and less than 1% in the standard deviation

Δ (Acceptable) : 10 to 50% in the mean value of glossiness, or less than 10% in the mean value of glossiness and more than 1% in the standard deviation

X (Unacceptable): More than 50% in the mean value of glossiness (16) Overall evaluation

The practicality as a surface layer film of wallpaper was evaluated in reference to film formation stability, fouling resistance, chemicals resistance, embossability, thermal adhesion to PVC, matt effect and temporal fragility resistance, according to the following criterion.

○: Excellent

Δ: Rather poor

X: Poor

[Production of aromatic polyesters]

{Synthesis of polyester 1 (PET)}

Zero point zero nine part by weight of magnesium acetate and 0.03 part by weight of diantimony trioxide were added to a mixture consisting of 95.3 parts by weight of dimethyl terephthalate and 54.7 parts by weight of ethylene glycol, and the mixture was heated to perform an ester interchange reaction according to a conventional method. Then, 0.026 part by weight of trimethyl phosphate was added to the ester interchange reaction product, and the mixture was transferred into a polycondensation reactor. Subsequently, with heating, the reaction system was gradually reduced in pressure, and polymerization was performed at a reduced pressure of $1.33 \times 10^2$ Pa or less and at 290˚C according to a conventional method, to prepare a polyester with an intrinsic viscosity of 0.65. The obtained polymer had Tg of 80˚C, Tc of 137˚C and ΔTcg of 56˚C.

{Synthesis of polyester 2 (PBT)}

Zero point zero five part by weight of tetrabutyl titanate and 0.02 part by weight of IRGANOX 1010 (Ciba Specialty Chemicals) were added to a mixture consisting of 69.7 parts by weight of dimethyl terephthalate and 80.3 parts by weight of 1,4-butanediol, and the mixture was heated finally to 210˚C, to perform an ester interchange reaction. After completion of the ester interchange reaction, 0.01 part by weight of trimethyl phosphate, 0.07 part by weight of tetrabutyl titanate and 0.03 part by weight of IRGANOX 1010 were added. The mixture was gradually heated and reduced in pressure, and finally at 245˚C and at $1.33 \times 10^2$ Pa or less, a polycondensation reaction was performed to prepare a polyester with an intrinsic viscosity of 0.85. The obtained polymer had Tg of 30˚C, Tc of 41˚C and ΔTcg of 11˚C.

{Synthesis of polyester 3 (PPT)}

Zero point zero six part by weight of tetrabutyl titanate was added to a mixture consisting of 80.5 parts by weight of dimethyl terephthalate and 69.5 parts by weight of 1, 3-propanediol, and the mixture was heated finally to 220˚C, to perform an ester interchange reaction. After completion of the ester interchange reaction, 0.05 part by weight of trimethyl phosphate and 0.04 part by weight of tetrabutyl titanate were added. The mixture was gradually heated and reduced in pressure, and finally at 260˚C and at $1.33 \times 10^2$ Pa or less, a polycondensation reaction was performed to prepare a polyester with an intrinsic viscosity of 0.70. The obtained polymer had Tg of 50˚C, Tc of 74˚C and ΔTcg of 24˚C.

{Synthesis of polyester 4 (PET/I)}

Eighty four point seven parts by weight of dimethyl terephthalate, 9.9 parts by weight of dimethyl isophthalate, 55.4 parts by weight of ethylene glycol, 0.04 part by weight of tetrabutyl titanate and 0.016 part by weight of IRGANOX 1010FP were supplied, and while the mixture was heated from 150˚C to 210˚C, an ester interchange reaction was performed according to a conventional method. Then, 0.042 part by weight of trimethylphosphoric acid was added, and 10 minutes later, 0.055 part by weight of tetrabutyl titanate and 0.022 part by weight of IRGANOX 1010FP were added. The mixture was transferred to a polycondensation reactor, and with heating, the reaction system was gradually reduced in pressure. At a reduced pressure of $1.33 \times 10^2$ Pa and at 290˚C, a polycondensation reaction was performed to obtain a copolyester resin containing 12 mol% of isophthalic acid with an intrinsic viscosity of 0.69.

[Polymerization of aliphatic polyesters]

(Synthesis of copolyester 1)

Seventy three point six parts by weight of dimethyl terephthalate, 16.2 parts by weight of ethylene glycol, 48.8 parts by weight of 1,4-butanediol, 0.04 part by weight of tetrabutyl titanate and 0.016 part by weight of IRGANOX 1010FP were supplied, and while the mixture was heated from 150˚C to 210˚C, an ester interchange reaction was performed according to a conventional method. Then, 0.042 part by weight of trimethylphosphoric acid was added, and 10 minutes later, 0.055 part by weight of tetrabutyl titanate, 0.022 part by weight of IRGANOX 1010FP, and a mixed slurry consisting of 6.6 parts by weight of a dimer acid (PRIPOL 1025 produced by Unichema), 3.6 parts by weight of 1,4-butanediol and 1.2 parts by weight of ethylene glycol heated to 50˚C beforehand were added. After the temperature in the reactor was returned to 210˚C, the mixture was stirred for 30 minutes, and transferred to a polymerization reactor, to perform a polycondensation reaction according to a conventional method. Finally at 245˚C and at 1.33 x $10^2$ Pa or less, a polycondensation reaction was performed to obtain a copolyester 1 containing 3 mol% of a dimer acid with an intrinsic viscosity of 0.69.

(Synthesis of copolyesters 2 and 3)

The copolyesters 2 and 3 stated in Table 1 were synthesized according to the same method as that for synthesizing the copolyester 1.

(Synthesis of copolyester 4)

Fifty seven point eight parts by weight of dimethyl terephthalate, 10.3 parts by weight of ethylene glycol, 30.9 wt% of 1,4-butanediol, 0.04 part by weight of tetrabutyl titanate and 0.016 part by weight of IRGANOX 1010FP were supplied, and while the mixture was heated from 150˚C to 210˚C, an ester interchange reaction was performed according to a conventional method. Then, 0.042 part by weight of trimethylphosphoric acid was added, and 10 minutes later, 0.055 part by weight of tetrabutyl titanate, 0.022 part by weight of IRGANOX 1010FP and a mixed slurry consisting of 29.6 parts by weight of a dimer acid (PRIPOL 1098 produced by Unichema), 16.1 parts by weight of 1,4-butanediol and 5.4 parts by weight of ethylene glycol heated to 50˚C beforehand were added. After the temperature in the reactor was returned to 210˚C, the mixture was stirred for 30 minutes and transferred to a polymerization reactor, to perform a polycondensation reaction according to a conventional method. Finally at 245˚C and at 1.33 x $10^2$ Pa or less, a polycondensation reaction was performed to obtain a copolyester 4 containing 15 mol% of a dimer acid with an intrinsic viscosity of 0.69.

(Synthesis of copolyester 5)

The copolyester 5 stated in Table 1 was synthesized according to the same method as that for synthesizing the copolyester 4.

(Synthesis of copolyester 6)

Zero point zero four part by weight of tetrabutyl titanate and 0.016 part by weight of IRGANOX 1010FP were added to a mixture consisting of 65.9 parts by weight of dimethyl terephthalate and 74.8 parts by weight of 1,4-butanediol, and while the mixture was heated from 150˚C to 210˚C, an ester interchange reaction was performed according to a conventional method. Then, 0.042 part by weight of trimethylphosphoric acid was added, and 10 minutes later, 0.055 part by weight of tetrabutyl titanate, 0.022 part by weight of IRGANOX 1010FP and a mixed slurry consisting of 6.0 parts by weight of a dimer acid (PRIPOL 1098 produced by Unichema) and 3.3 parts by weight of 1,4-butanediol heated to 50˚C beforehand were added. After the temperature in the reactor was returned to 210˚C, the mixture was stirred for 30 minutes and transferred to a polymerization reactor, to perform a polycondensation reaction according to a conventional method. Finally at 245˚C and at 1.33 x $10^2$ Pa or less, a polycondensation reaction was performed to obtain a copolyester 6 containing 3 mol% of a dimer acid with an intrinsic viscosity of 0.70.

(Synthesis of copolyester 7)

The copolyester 7 stated in Table 1 was synthesized according to the same method as that for synthesizing the copolyester 6.

(Synthesis of copolyester 8)

Zero point zero three part by weight of tetrabutyl titanate and 0.011 part by weight of IRGANOX 1010FP were added to a mixture consisting of 41.4 parts by weight of dimethyl terephthalate, 13.1 parts by weight of dimethyl isophthalate and 48.7 parts by weight of 1,4-butanediol, and the mixture was heated from 150˚C to 210˚C, to perform an ester interchange reaction according to a conventional method. Then, 0.01 part by weight of trimethylphosphoric acid was added, and 10 minutes later, 0.066 part by weight of tetrabutyl titanate, 0.025 part by weight of IRGANOX 1010FP and a mixed slurry consisting of 34.2 parts by weight of a dimer acid (PRIPOL 1098 produced by Unichema) and 12.4 parts by weight of 1,4-butanediol heated to 50˚C beforehand were added. After the temperature in the reactor was returned to 210˚C, the mixture was stirred for 30 minutes and transferred to a polymerization reactor, to perform a polycondensation reaction according to a conventional method. Finally at 240˚C and at $1.33 \times 10^2$ Pa or less, a polycondensation reaction was performed to obtain a copolyester 8 containing 20 mol% of isophthalic acid and 17 mol% of a dimer acid with an intrinsic viscosity of 1.02.

{Preparation of particle master 1 (MS-1)}

A mixture consisting of 89.5 parts by weight of the polyester 2, 10 parts by weight of talc (Ultrafine Powder Talc SG-2000, average particle size 1.0 $\mu$m, whiteness 97%, produced by Nippon Talc Co., Ltd.) and 0.5 parts by weight of an antimicrobial agent (Inorganic Antimicrobial Agent, "Zeomic" produced by Sinanen Zeomic Co., Ltd.) was kneaded using a vented counter-rotation twin-screw extruder at 260˚C, to prepare polyester master pellets containing 10 wt% of antimicrobial talc.

{Preparation of particle master 2 (MS-2)}

A mixture consisting of 89.5 parts by weight of the copolyester 2, 10 parts by weight of talc (Ultrafine Powder Talc SG-1000, average particle size 2.0 $\mu$m, whiteness 97%, produced by Nippon Talc Co., Ltd.) and 0.5 part by weight of an antimicrobial agent (Inorganic Antimicrobial Agent, "Zeomic" produced by Sinanen Zeomic Co., Ltd.) was kneaded using a vented counter-rotation twin-screw extruder at 230˚C, to prepare copolyester master pellets containing 10 wt% of antimicrobial talc.

{Preparation of particle master 3 (MS-3)}

A mixture consisting of 90 parts by weight of polypropylene {"Prime Polypro" F102W, MI 2.0 g/10 min (230˚C, load 2.13 kg), density 0.91 g/cm$^3$, produced by Mitsui Chemicals Ltd. } and 10 parts by weight of talc (Ultrafine Powder Talc SG-2000, average particle size 1.0 $\mu$m, whiteness 97%, produced by Nippon Talc Co., Ltd.) was kneaded at 220˚C using a vented counter-rotation twin-axis extruder with a diameter of 30 mm, to prepare polypropylene master pellets containing 10 wt% of talc.

{Preparation of particle master 4 (MS-4)}

A mixture consisting of 90 parts by weight of the polyester 2 and 10 parts by weight of silicon dioxide ("Silysia 445", average particle size 2.5 $\mu$m, produced by Fuji Silysia Chemical Ltd.) was kneaded at 260˚C using a vented counter-rotation twin-axis extruder with a diameter of 30 mm, to prepare polyester master pellets containing 10 wt% of antimicrobial silicon dioxide.

The compositions of the polyesters, copolyesters and particle masters, etc. used in the following examples and comparative examples are shown in Table 1.

[Table 1]

| Polyester | Fatty acid or derivative thereof | | | Components as recurring units constituting a polyester | | | | Glass transition temperature Tg (·C) | Crystallization temperature Tc (·C) | Crystallization parameter Δ Tcg (·C) | Melting point Tm (·C) |
|---|---|---|---|---|---|---|---|---|---|---|---|
| | Composition ratio (wt%) | | | Acid as component | | Glycol as component | | | | | |
| | Monomer | Dimer | Trimer | Compound | Composition ratio (mol%) | Compound | Composition ratio (mol%) | | | | |
| Polyester 1 | - | - | - | DMT | 100 | EG | 100 | 80 | 154 | 74 | 256 |
| Polyester 2 | - | - | - | DMT | 100 | BG | 100 | 30 | 41 | 11 | 228 |
| Polyester 3 | - | - | - | DMT | 100 | PG | 100 | 50 | 74 | 24 | 223 |
| Polyester 4 | - | - | - | DMT | 88 | EG | 100 | 76 | 132 | 55 | 234 |
| | | | | DMI | 12 | | | | | | |
| Copolyester 1 | 2.2 | 78.6 | 19.2 | DMT | 97 | EG | 40 | 43 | 83 | 40 | 227 |
| | | | | C36 | 3 | BG | 60 | | | | |
| Copolyester 2 | 2.2 | 78.6 | 19.2 | DMT | 90 | EG | 40 | 29 | 74 | 45 | 196 |
| | | | | C36 | 10 | BG | 60 | | | | |
| Copolyester 3 | 2.2 | 78.6 | 19.2 | DMT | 90 | EG | 50 | 30 | 83 | 53 | 162 |
| | | | | C36 | 12 | BG | 50 | | | | |
| Copolyester 4 | 0.1 | 98.5 | 1.4 | DMT | 85 | EG | 40 | 19 | 68 | 49 | 175 |
| | | | | C36 | 15 | BG | 60 | | | | |
| Copolyester 5 | 0.1 | 98.5 | 1.4 | DMT | 80 | EG | 50 | 14 | 73 | 59 | 156 |
| | | | | C36 | 20 | BG | 50 | | | | |
| Copolyester 6 | 2.2 | 78.6 | 19.2 | DMT | 97 | BG | 100 | 22 | 37 | 15 | 215 |
| | | | | C36 | 3 | | | | | | |
| Copolyester 7 | 2.2 | 78.6 | 19.2 | DMT | 83 | BG | 100 | -6 | 20 | 26 | 190 |
| | | | | C36 | 17 | | | | | | |

19

EP 1 950 036 A1

[Table 1]

| Polyester | Fatty acid or derivative thereof | | | Components as recurring units constituting a polyester | | | | Glass transition temperature Tg (·C) | Crystallization temperature Tc (·C) | Crystallization parameter Δ Tcg (·C) | Melting point Tm (·C) |
|---|---|---|---|---|---|---|---|---|---|---|---|
| | Composition ratio (wt%) | | | Acid as component | | Glycol as component | | | | | |
| | Monomer | Dimer | Trimer | Compound | Composition ratio (mol%) | Compound | Composition ratio (mol%) | | | | |
| MS-1 (Polyester 2) | - | - | - | DMT | 100 | BG | 100 | 28 | 41 | 13 | 228 |
| MS-2 (Copolyester 2) | - | - | - | DMT | 90 | EG | 40 | 29 | 74 | 45 | 196 |
| | | | | C36 | 10 | BG | 60 | | | | |
| MS-3 (PP) | - | - | | | | | | - | - | - | 165 |
| MS-4 (Polyester 2) | - | - | - | DMT | 100 | BG | 100 | 28 | 41 | 13 | 228 |
| Copolyester 8 | 0.1 | 98.5 | 1.4 | DMT | 63 | BG | 100 | 44 | Not detected | - | 150 |
| | | | | DMI | 20 | | | | | | |
| | | | | C36 | 17 | | | | | | |

The respective symbols stated in Table 1 mean the following:

DMT: Terephthalic acid
DMI: Isophthalic acid
C36: Dimer acid (with 36 carbon atoms at the main chain)
EG: Ethylene glycol
BG: 1,4-butanediol
PG: 1,3-propanediol

(Example 1)

As the polyester of the layer A, a mixture consisting of 40 wt% of the polyester 1, 55 wt% of the particle master MS-1 and 5 wt% of the copolyester 7 was supplied into a vented counter-rotation twin-screw extruder A (two vents, L/D = 70) set at an extrusion temperature of 260˚C. As the polyester of the layer B, the copolyester 4 was supplied into a vented counter-rotation twin-screw extruder (two vents, L/D = 70) set at 230˚C. They were introduced into a two-layer T die with a slit clearance of 0.5 mm set at 250˚C and extruded as a film, and using a suction chamber and blowing slit air, the film was cooled and solidified by a matt finish casting drum with a temperature of 55˚C, to prepare a matt multilayer polyester film with a thickness of 15 $\mu$m (layer A thickness/layer B thickness = 10 $\mu$m/5 $\mu$m). The plane orientation coefficient (fn) of the film was 0.01. The matt multilayer polyester film could be stably formed, and it did not become fragile with lapse of time and was excellent in handling properties. Further, as shown in Table 3, it was excellent in matt effect, embossability and water vapor barrier property.

Next, a PVC foam for wallpaper was prepared. A mixture consisting of 100 parts by weight of PVC resin, 50 parts by weight of calcium carbonate ("Nanox #30" produced by Maruo Calcium Co., Ltd.) as a filler, 55 parts by weight of bis (2-ethylhexyl) phthalate ("DOP" produced by Daihachi Chemical Industry Co., Ltd.) as a plasticizer, 20 parts by weight of titanium oxide ("KRONOS KA-20" produced by Chitan Kogyo K.K.) as a pigment, 3 parts by weight of tricresyl phosphate ("TCP" produced by Daihachi Chemical Industry Co., Ltd.) as a flame retarder, 2 parts by weight of a Ca/Zn-based stabilizer ("CZ Series" produced by Nissan Chemical Industries, Ltd.) as a stabilizer, 2 parts by weight of p,p'-oxybisbenzenesulfonyl hydrazide ("Cellmike S" produced by Sankyo Chemical Co., Ltd.) as a foaming agent and 2 parts by weight of an organic metal pyridine-based compound ("Amorden TMS-32" produced by Daiwa Chemical Industries Co., Ltd.) as an antimicrobial agent was laminated on a flame retardant paper sheet for lining obtained by impregnating 100 parts by weight of paper with 20 parts by weight of guanidine sulfamate ("APINON-145" produced by Sanwa Chemical Co., Ltd.), and the laminate was heated at a temperature of 130˚C to foam PVC, for obtaining a PVC foam for wallpaper.

Next, the surface of the layer B of the matt multilayer polyester film and the PVC surface of the PVC foam for wallpaper were arranged to face each other, and while the film and the PVC foam were preheated at 130˚C, they were embossed and thermally bonded simultaneously using an embossing roll (pressure 9.8 x $10^4$ N/m$^2$, speed 4 m/min), to obtain a wallpaper board.

The obtained wallpaper board had an excellent matt effect after embossing, fouling resistance, chemicals resistance and thermal adhesion to PVC as its properties as shown in Table 3.

(Example 2)

A matt multilayer polyester film with a thickness of 20 $\mu$m (layer A thickness/layer B thickness = 13.3 $\mu$m/6.7 $\mu$m) was prepared as described in Example 1, except that a mixture consisting of 20 wt% of the polyester 1, 60 wt% of the particle master MS-2 and 20 wt% of the copolyester 6 was used as the polyester of the layer A, and that the copolyester 2 was used as the polyester of the layer B. The plane orientation coefficient (fn) of the film was 0.00. Further, as described in Example 1, a PVC foam for wallpaper and a wallpaper board were prepared.

As for the properties of the obtained wallpaper board, as shown in Table 3, the embossability and thermal adhesion to PVC were rather inferior to those of the film and wallpaper board of Example 1 but were still practical, and the matt effect, fouling resistance and chemicals resistance were good.

(Example 3)

A matt multilayer polyester film with a thickness of 20 $\mu$m (layer A thickness/layer B thickness = 13.3 $\mu$m/6.7 $\mu$m) was prepared as described in Example 1, except that a mixture consisting of 40 wt% of the polyester 4, 50 wt% of the particle master MS-4 and 10 wt% of the copolyester 6 was used as the polyester of the layer A, and that the copolyester 7 was used as the layer B. The plane orientation coefficient (fn) of the film was 0.00. Further, as described in Example 1, a PVC foam for wallpaper and a wallpaper board were prepared.

As for the properties of the obtained film and wallpaper board, as shown in Table 3, the thermal adhesion to PVC was rather inferior to that of the wallpaper board of Example 1 but was still practical, and the matt effect, chemicals resistance and fouling resistance were good.

(Example 4)

A matt multilayer polyester film with a thickness of 20 $\mu$m (layer A thickness/layer B thickness = 15 $\mu$m/5 $\mu$m) was prepared as described in Example 1, except that a mixture consisting of 35 wt% of the polyester 3, 50 wt% of the particle master MS-1 and 15 wt% of the copolyester 1 was used as the polyester of the layer A, and that the copolyester 3 was used as the polyester of the layer B. The plane orientation coefficient (fn) of the film was 0.00. Further, as described in Example 1, a PVC foam for wallpaper and a wallpaper board were prepared.

As for the properties of the obtained wallpaper board, as shown in Table 3, the embossability and thermal adhesion to PVC were rather inferior to those of the film and wallpaper board of Example 1 but were still practical, and the fouling resistance, chemicals resistance, fouling resistance and thermal adhesion to PVC were good.

(Example 5)

A matt multilayer polyester film with a thickness of 20 $\mu$m (layer A thickness/layer B thickness = 15 $\mu$m/5 $\mu$m) was prepared as described in Example 1, except that a mixture consisting of 10 wt% of the polyester 2, 10 wt% of the particle master MS-3 and 80 wt% of the copolyester 1 was used as the polyester of the layer A, and that a mixture consisting of 25 wt% of the polyester 1 and 75 wt% of the copolyester 5 was used as the polyester of the layer B. The plane orientation coefficient (fn) of the film was 0.01. Further, as described in Example 1, a PVC foam for wallpaper and a wallpaper board were prepared.

As for the properties of the obtained film and wallpaper board, as shown in Table 3, the film formation stability at the time of film preparation was rather inferior but was still practical, and the wallpaper board was good in matt effect, fouling resistance, chemicals resistance and thermal adhesion to PVC.

(Example 6)

A matt multilayer polyester film with a thickness of 20 $\mu$m (layer A thickness/layer B thickness = 13. 3 $\mu$m/6.7 $\mu$m) was prepared as described in Example 1, except that a mixture consisting of 47 wt% of the polyester 1, 50 wt% of the particle master MS-2 and 3 wt% of the particle master MS-3 was used as the polyester of the layer A, and that the copolyester 4 was used as the polyester of the layer B. The plane orientation coefficient (fn) of the film was 0.01. Further, as described in Example 1, a wallpaper board was prepared.

As for the properties of the obtained film and wallpaper board, as shown in Table 3, the film formation stability at the time of film preparation was rather inferior but was still practical, and the wallpaper board was good in matt effect, fouling resistance, chemicals resistance and thermal adhesion to PVC.

(Comparative Example 1)

A non-oriented single-layer polyester film with a thickness of 20 $\mu$m was prepared as described in Example 1, except that the polyester 2 was used as the polyester of the layer A, and that the polyester of the layer B was not used. The plane orientation coefficient (fn) of the film was 0.01. Further, as described in Example 1, a wallpaper board was prepared.

As for the properties of the obtained film and wallpaper board, as shown in Table 3, the fouling resistance and chemicals resistance were good, but since the film was crystallized, the embossability, matt effect and thermal adhesion to PVC were inferior.

(Comparative Example 2)

A non-oriented multilayer polyester film with a thickness of 20 $\mu$m (layer A thickness/layer B thickness = 15 $\mu$m/5 $\mu$m) was prepared as described in Example 1, except that the polyester 1 was used as the polyester of the layer A, and that the polyester 4 was used as the polyester of the layer B. The plane orientation coefficient (fn) of the film was 0.00. Further, as described in Example 1, a wallpaper board was prepared.

As for the properties of the obtained film and wallpaper board, as shown in Table 3, the fouling resistance and chemicals resistance were excellent, but the matt effect and thermal adhesion to PVC were inferior.

(Comparative Example 3)

A non-oriented single-layer polyester film with a thickness of 20 μm was prepared as described in Example 1, except that a mixture consisting of 40 wt% of the polyester 1, 57 wt% of the polyester 2 and 3 wt% of the copolyester 4 was used as the polyester of the layer A and that the polyester of the layer B was not used. The plane orientation coefficient (fn) of the film was 0.01. Further, as described in example 1, a wallpaper board was prepared.
As for the properties of the obtained film and wallpaper board, as shown in Table 3, the fouling resistance and chemicals resistance were excellent, but the matt effect and thermal adhesion to PVC were inferior.

(Comparative Example 4)

A non-oriented multilayer polyester film with a thickness of 20 μm (layer A thickness/layer B thickness = 15 μm/5 μm) was prepared as described in Example 1, except that the copolyester 6 was used as the polyester of the layer A and that the copolyester 4 was used as the polyester of the layer B. Further, as described in Example 1, a wallpaper board was prepared. The plane orientation coefficient (fn) of the film was 0.00.
As for the properties of the obtained film and wallpaper board, as shown in Table 3, the thermal adhesion to PVC was excellent, but since the polyester of the layer A was too low in Tg, the embossability was inferior.

(Comparative Example 5)

The adhesive layer of an ethylene vinyl alcohol-based copolymer (EVOH) film, "Eval HF-ME" (with an adhesive layer) produced by Kuraray Co., Ltd. was removed using absorbent cotton impregnated with methyl ethyl ketone, to use the film as a surface layer film of wallpaper.
The "Eval" film and wallpaper board were excellent in matt effect and fouling resistance, but rater inferior in embossability, being inferior in water vapor barrier property, chemicals resistance and thermal adhesion to PVC.

(Example 7)

A matt multilayer polyester film with a thickness of 15 μm (layer A thickness/layer B thickness = 10 μm/5 μm) was prepared as described in Example 1, except that a mixture consisting of 60 wt% of the polyester 4, 25 wt% of the particle master MS-4 and 15 wt% of the copolyester 7 was used as the polyester of the layer A and that the copolyester 8 was used as the polyester of the layer B. The plane orientation coefficient (fn) of the film was 0.00. Further, as described in Example 1, a wallpaper board was prepared.
As for the properties of the obtained film and wallpaper board, as shown in Table 3, the film formation stability at the time of film preparation and matt effect were rather inferior but were still practical, and the wallpaper board was good in matt effect, fouling resistance, chemicals resistance and thermal adhesion to PVC.
The properties of the layers A and B used in the examples and the comparative examples are shown in Table 2, and the evaluation results of the film properties and wallpaper properties in the examples and the comparative examples are shown in Table 3.
[Table 2]

| | | | Layer A | | | | Layer B | | | | | |
|---|---|---|---|---|---|---|---|---|---|---|---|---|
| | Polymer | Mixing ratio (wt%) | Glass transition temperature Tg (°C) | Crystallization temperature Tc (°C) | Crystallization parameter ΔTcg (°C) | Crystallization parameter ΔTcg (°C) | Polymer | Mixing ratio (wt%) | Glass transition temperature Tg (°C) | Crystallization temperature Tc (°C) | Crystallization parameter ΔTcg (°C) | Melting point Tm (°C) |
| Example 1 | Polyester 1 | 40 | 47 | 85 | 38 | 236 | Copolyester 4 | 100 | 19 | 68 | 49 | 175 |
| | MS-1 | 55 | | | | | | | | | | |
| | Copolyester 7 | 5 | | | | | | | | | | |
| Example 2 | Polyester 1 | 20 | 38 | 83 | 45 | 212 | Copolyester 2 | 100 | 29 | 74 | 45 | 196 |
| | MS-2 | 60 | | | | | | | | | | |
| | Copolyester 6 | 20 | | | | | | | | | | |
| Example 3 | Polyester 4 | 40 | 49 | 81 | 33 | 230 | Copolyester 7 | 100 | -6 | 20 | 26 | 190 |
| | MS-4 | 50 | | | | | | | | | | |
| | Copolyester 6 | 10 | | | | | | | | | | |
| Example 4 | Polyester 3 | 35 | 37 | 60 | 23 | 226 | Copolyester 3 | 100 | 30 | 83 | 53 | 162 |
| | MS-1 | 50 | | | | | | | | | | |
| | Copolyester 1 | 15 | | | | | | | | | | |
| Example 5 | Polyester 2 | 10 | 41 | 78 | 37 | 227 | Polyester 1 | 25 | 30 | 92 | 62 | 181 |
| | Copolyester 1 | 80 | | | | | Copolyester 5 | 75 | | | | |
| | MS-3 | 10 | | | | | | | | | | |

24

(continued)

[Table 2]

| | | | Layer A | | | | | | Layer B | | | |
|---|---|---|---|---|---|---|---|---|---|---|---|---|
| | Polymer | Mixing ratio (wt%) | Glass transition temperature Tg (°C) | Crystallization temperature Tc (°C) | Crystallization parameter ΔTcg (°C) | Crystallization parameter ΔTcg (°C) | Polymer | Mixing ratio (wt%) | Glass transition temperature Tg (°C) | Crystallization temperature Tc (°C) | Crystallization parameter ΔTcg (°C) | Melting point Tm (°C) |
| Example 6 | Polyester 1 | 47 | 54 | 113 | 59 | 225 | Copolyester 4 | 100 | 19 | 68 | 49 | 175 |
| | MS-2 | 50 | | | | | | | | | | |
| | MS-3 | 3 | | | | | | | | | | |
| Comparative Example | Polyester 2 | 100 | 28 | 41 | 13 | 228 | - | - | - | - | - | - |
| Comparative Example | Polyester 1 | 100 | 80 | 154 | 74 | 256 | Polyester 4 | 100 | 76 | 132 | 55 | 234 |
| Comparative Example | Polyester 1 | 40 | 49 | 87 | 38 | 238 | - | - | - | - | - | - |
| | Polyester 2 | 57 | | | | | | | | | | |
| | Copolyester 4 | 3 | | | | | | | | | | |
| Comparative Example | Copolyester 6 | 100 | 22 | 37 | 15 | 215 | Copolyester 4 | 100 | 19 | 68 | 49 | 175 |
| Example 7 | Polyester 4 | 60 | 52 | 92 | 40 | 220 | Copolyester 8 | 100 | 44 | Not detected | - | 150 |
| | Copolyester 7 | 15 | | | | | | | | | | |
| | MS-4 | 25 | | | | | | | | | | |

[Table 3]

| | | Example 1 | Example 2 | Example 3 | Example 4 | Example 5 | Example 6 | Comparative Example 1 | Comparative Example 2 | Comparative Example 3 | Comparative Example 4 | Comparative Example 5 | Example 7 |
|---|---|---|---|---|---|---|---|---|---|---|---|---|---|
| Properties of film | Film formation stability | O | O | O | O | △ | △ | O | O | O | O | — | △ |
| | Temporal fragility resistance | O | O | O | O | O | O | O | O | × | O | O | O |
| | Matt effect | O | O | O | O | O | O | × | × | △ | × | O | △ |
| | Embossability | O | △ | O | △ | O | O | × | △ | O | × | △ | O |
| Properties of wallpaper board | Water vapor barrier property | O | O | O | O | O | O | O | O | O | △ | × | O |
| | Fouling resistance | O | O | O | O | O | O | O | O | O | △ | △ | O |
| | Chemicals resistance | O | O | O | O | O | O | O | O | O | △ | × | O |
| | Thermal adhesion to PVC | O | △ | △ | △ | O | O | × | × | × | O | × | O |
| | Matt effect after embossing | O | O | O | O | △ | △ | × | × | × | × | O | △ |
| Overall evaluation | | O | O | O | O | O | O | × | × | × | × | × | O |

27

**EP 1 950 036 A1**

[Industrial field of application]

The matt multilayer polyester film of this invention can be used in various industrial materials and packaging materials requiring moldability, as a single sheet or a composite sheet, using its excellent properties such as fouling resistance, chemicals resistance, moldability, thermal adhesion, matt effect, embossability and water vapor barrier property. The composite sheet can be obtained by sticking the matt multilayer polyester film to a substrate formed of a metal, wood or paper, or a substrate such as a resin sheet or resin board.

Particular applications of the matt multilayer polyester film include the conventional applications such as flexible films and moldable films, for example, packaging films, wrapping films, stretchable films, architectural films such as partition films, wallpaper boards and plywood decorative sheets, especially preferably wallpaper films.

**Claims**

1. A matt multiplayer polyester film comprising at least two layers A and B, wherein the polyester of the layer A is a polyester with a glass transition temperature TgA of 30 to 70˚C consisting of (a) 60 to 95 wt% of a polyester and (b) 5 to 40 wt% of an incompatible resin, while the main one of the polyesters of the layer B is a copolyester with a melting point TmB of 120 to 210˚C, the surface glossiness of said layer A being less than 50%.

2. A matt multilayer polyester film, according to claim 1, wherein the polyester of said layer A is a composition consisting of 60 to 90 wt% of the polyester (a), 5 to 20 wt% of the incompatible resin (b), and 5 to 20 wt% of a thermoplastic resin (c) and/or an inorganic filler (d).

3. A matt multilayer polyester film, according to claim 1, wherein the incompatible resin (b) is a long chain aliphatic dicarboxylic acid copolyester.

4. A matt multilayer polyester film, according to claim 1, wherein the polyesters of said layer B are copolyesters, each consisting of dicarboxylic acids including 90 mol% or more of an aromatic dicarboxylic acid and a long chain aliphatic dicarboxylic acid and glycols including 90 mol% or more of ethylene glycol and 1,4-butadiol, respectively as monomer components.

5. A matt multilayer polyester film, according to claim 1, wherein at least one of the polyesters of said layer B satisfies the following (1) and (2):

   (1) The amount of the aromatic dicarboxylic acid as a component is 60 to 99 mol% and the amount of the long chain aliphatic dicarboxylic acid as a component is 1 to 40 mol%, respectively based on the amount of all the dicarboxylic acids.
   (2) The glycols as components include at least one or more glycols respectively with less than 10 carbon atoms.

6. A matt multilayer polyester film, according to claim 1, wherein the dimer content of the long chain aliphatic dicarboxylic acid as a component is 70 to 90 wt% and the trimer content is 10 to 30 wt%.

7. A matt multilayer polyester film, according to claim 1, wherein said long chain aliphatic dicarboxylic acid as a component is a dimer acid or a dimer acid derivative.

8. A matt multilayer polyester film, according to claim 1, which has a plane orientation coefficient of 0 to 0.05.

9. A laminate **characterized in that** the matt multilayer polyester film as set forth in claim 1 and a wallpaper board substrate are laminated on each other with the layer A of the matt multilayer polyester film kept as the outer surface.

10. A laminate, according to claim 9, wherein said wallpaper board substrate contains a polyolefin resin layer or a polyvinyl chloride resin layer.

<table>
<tr><td colspan="2" align="center">**INTERNATIONAL SEARCH REPORT**</td><td colspan="2">International application No.<br>PCT/JP2006/322596</td></tr>
</table>

A.  CLASSIFICATION OF SUBJECT MATTER
*B32B27/36*(2006.01)i, *C08L67/02*(2006.01)i, *D06N7/04*(2006.01)i

According to International Patent Classification (IPC) or to both national classification and IPC

B.  FIELDS SEARCHED

Minimum documentation searched (classification system followed by classification symbols)
B32B1/00-43/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2004-306286 A  (Unitika Ltd.),<br>04 November, 2004 (04.11.04),<br>Claims; Par. Nos. [0011] to [0018], [0041];<br>examples<br>(Family: none) | 1-3<br>1-10 |
| X | JP 2001-335650 A  (Toray Industries, Inc.),<br>04 December, 2001 (04.12.01),<br>Claims; Par. No. [0010]<br>(Family: none) | 1-3,7,8 |
| Y | JP 5-131601 A  (Toray Industries, Inc.),<br>28 May, 1993 (28.05.93),<br>Claims; Par. Nos. [0010] to [0016], [0030];<br>examples<br>(Family: none) | 1-10 |

☐  Further documents are listed in the continuation of Box C.       ☐  See patent family annex.

| | |
|---|---|
| *        Special categories of cited documents:<br>"A"    document defining the general state of the art which is not considered   to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| | |
|---|---|
| Date of the actual completion of the international search<br>24 January, 2007 (24.01.07) | Date of mailing of the international search report<br>06 February, 2007 (06.02.07) |
| Name and mailing address of the ISA/<br>Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60224542 A
- JP 60239233 A
- JP 3172559 B
- JP 3474276 B
- JP 5131601 A